# EUROPÄISCHE PATENTSCHRIFT

(11) **EP 0 582 194 B1**
(45) Veröffentlichungstag und Bekanntmachung des Hinweises auf die Patenterteilung: **06.05.1998**
(21) Anmeldenummer: 93112056.2
(22) Anmeldetag: 28.07.1993
(51) Int. Cl.: C07F 17/00, C08F 10/00, C08F 4/642, C08F 4/76

(54) **Verfahren zur Herstellung eines Olefinpolymers unter Verwendung von Metallocenen mit speziell substituierten Indenylliganden**
Process for the preparation of polymers using metallocenes with specifically substituted indenyl ligands
Procédé de préparation de polymères utilisant des métallocènes avec des ligands indényl substituées d'une manière spécifique

(30) Priorität: 03.08.1992 DE 4225649
(43) Veröffentlichungstag der Anmeldung: 09.02.1994
(73) Patentinhaber: TARGOR GmbH, 55116 Mainz (DE)
(72) Erfinder: Winter, Andreas, Dr., D-61479 Glashütten/Ts. (DE); Küber, Frank, Dr., D-61440 Oberursel (DE); Spaleck, Walter, Dr., D-65835 Liederbach (DE); Riepl, Herbert, D-85221 Dachau (DE); Herrmann, Wolfgang Anton, Prof. Dr., D-85354 Freising (DE); Dolle, Volker, Dr., D-64625 Bensheim (DE); Rohrmann, Jürgen, Dr., D-65779 Kelkheim/Ts. (DE)

(56) Entgegenhaltungen:
- EP-A- 0 485 823
- CHEMICAL ABSTRACTS, Band 117, 1992, Columbus, Ohio, US, Zusammenfassung-Nr. 27208v, LEE I.M. et al.
- JOURNAL OF THE AMERICAN CHEMICAL SOCIETY, Band 115, Nr. 14, 14. Juli 1993, Seiten 6159-6164, HART J.R.

## Beschreibung

Die Erfindung bezieht sich auf ein Verfahren zur Herstellung von Olefinpolymeren und -copolymeren unter Verwendung von Metallocenen mit speziell substituierten Indenylliganden.

Die Verwendung von chiralen Metallocenen als Katalysatorkomponente bei der Olefinpolymerisation ist bekannt und führt zu hochisotaktischen Polyolefinen mit hoher Kristallinität und hohen Schmelzpunkten (vgl. Angew. Chem. 97 (1985) 507, EP 0 485 822).

Bei dem Einsatz von nicht chiralen Metallocenen erhält man ataktische Polymere, die wegen ihrer unausgewogenen und ungenügenden Produkteigenschaften technisch nur von begrenzter Bedeutung sind.

Von großem Interesse sind Produkte, die in ihrem Eigenschaftsprofil zwischen diesen beiden Extremen liegen.

Es bestand die Aufgabe, ein geeignetes Verfahren bzw. ein geeignetes Katalysatorsystem zu finden, das die Herstellung von Polymeren mit reduzierter Kristallinität, erhöhter Schlagzähigkeit, erhöhter Transparenz, hoher Fließfähigkeit bei Verarbeitungstemperatur, reduziertem Schmelzpunkt und hohem Molekulargewicht ermöglicht.

Anwendungsschwerpunkte solcher Polymere sind Weichmacher- und Gleitmittelrezepturen, Schmelzkleberanwendungen, Beschichtungen, Abdichtungen, Isolierungen, Ausgießmassen oder Schalldämmungsmaterialien.

Die Erfindung betrifft somit ein Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I ist 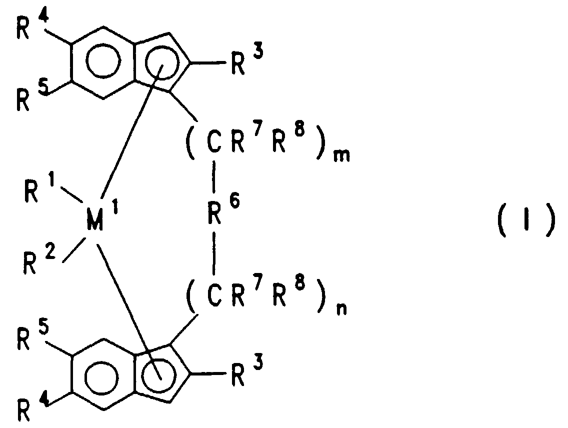 worin
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁₋C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³, R⁴ und R⁵: gleich oder verschieden sind und R³ und R⁴ und/oder R⁵ von Wasserstoff verschieden sind und eine C₁-C₂₀-Alkylgruppe, eine C₆-C₂₀-Arylgruppe, eine C₂-C₁₀-Alkyenylgruppe, eine C₇-C₄₀-Arylalkylgruppe, eine C₇-C₄₀-Alkylarylgruppe oder eine C₈-C₄₀-Arylalkenylgruppe bedeuten, wobei diese Reste auch halogeniert sein können,
- R⁴ oder R⁵: kann auch Wasserstoff sein,
- R⁶: 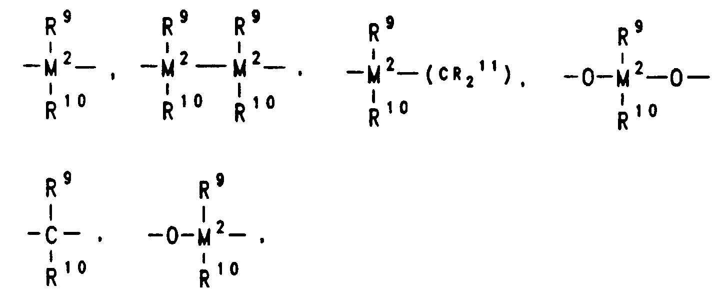
=BR⁹, =AlR⁹, -Ge-, -Sn-, -O-, -S-, =SO, =SO₂, =NR⁹, =CO, =PR⁹ oder = P(O)R⁹ ist,
wobei
- R⁹, R¹⁰ und R¹¹: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁹ und R¹⁰ oder R⁹ und R¹¹ jeweils mit den sie verbindenden Atomen einen Ring bilden,
- M²: Silizium, Germanium oder Zinn ist,
- R⁷ und R⁸: gleich oder verschieden sind und die für R⁹ genannte Bedeutung haben und
- m und n: gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

Die Indenylliganden des in dem erfindungsgemäßen Verfahren verwendeten Metallocens der Formel I sind in 2-Position (R³) und in mindestens einer der beiden Positionen 5 (R⁴) und 6 (R⁵) substituiert.

Der für das erfindungsgemäße Verfahren zu verwendende Katalysator besteht aus einem Cokatalysator und einem Metallocen der Formel I.

In Formel I ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³, R⁴ und R⁵ sind gleich oder verschieden und R³ und R⁴ und/oder R⁵ sind von Wasserstoff verschieden und bedeuten eine C₁-C₂₀-, vorzugsweise C₁-C₁₀-Alkylgruppe, eine C₆-C₂₀-, vorzugsweise C₆-C₁₂-Arylgruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe oder eine C₈-C₄₀-, vorzugsweise C₈-C₁₂-Arylalkenylgruppe, wobei diese Reste auch halogeniert sein können.
Besonders bevorzugt sind R³, R⁴ oder R⁵, Methyl, Trifluormethyl, Ethyl, Propyl, Butyl, Pentyl, Hexyl, Heptyl, Octyl, Nonyl, Decyl, Benzyl, Phenyl, Tolyl, Mesityl oder Xylyl.
R⁴ oder R⁵ kann auch Wasserstoff sein, wenn dies der Fall ist, ist R⁵ bevorzugt Wasserstoff. R⁶ ist 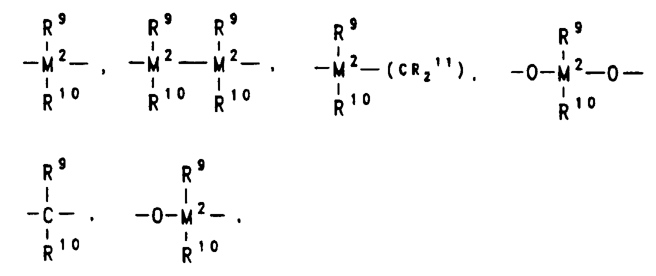 =BR⁹, =AlR⁹, -Ge-, -Sn-, -O-, -S-, =SO, =SO₂, =NR⁹, =CO, = PR⁹ oder =P(O)R⁹, wobei R⁹, R¹⁰ und R¹¹ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁹ und R¹⁰ oder R⁹ und R¹¹ bilden jeweils zusammen mit den sie verbindenden Atomen einen Ring.

M² ist Silizium, Germanium oder Zinn, bevorzugt Silizium und Germanium.

R⁶ ist vorzugsweise =CR⁹R¹⁰, =SiR⁹R¹⁰, =GeR⁹R¹⁰, -O-, -S-, =SO, =PR⁹ oder =P(O)R⁹ und besonders bevorzugt = SiR⁹R¹⁰.

R⁷ und R⁸ sind gleich oder verschieden und haben die für R⁹ genannte Bedeutung.

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene die Verbindungen der Formel A 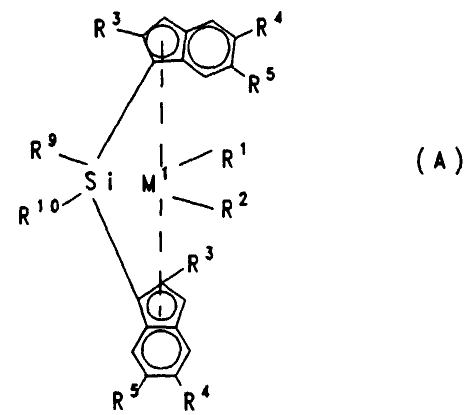 mit
M¹ = Zr oder Hf; insbesondere Zr; R¹ und R² = gleich oder verschieden und bedeuten (C₁-C₃)-Alkyl oder Chlor; R³ und R⁴ = gleich oder verschieden und bedeuten (C₁-C₁₀)-, bevorzugt (C₁-C₄)-Alkyl, das halogeniert sein kann, insbesondere Methyl und Butyl, (C₆-C₁₀)-Aryl, insbesondere Phenyl, R⁵ = Wasserstoff, (C₁-C₁₀)-, insbesondere (C₁-C₄)-Alkyl, das halogeniert sein kann; (C₆-C₁₀)-Aryl, insbesondere Phenyl, und R⁹ und R¹⁰ = gleich oder verschieden und bedeuten (C₁-C₁₀)-, bevorzugt (C₁-C₄)-Alkyl, insbesondere Methyl und (C₆-C₁₀)-, bevorzugt (C₆-C₈)-Aryl, insbesondere Phenyl.

Die chiralen Metallocene werden bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die vorstehend beschriebenen Metallocene können nach folgendem Reaktionsschema hergestellt werden: 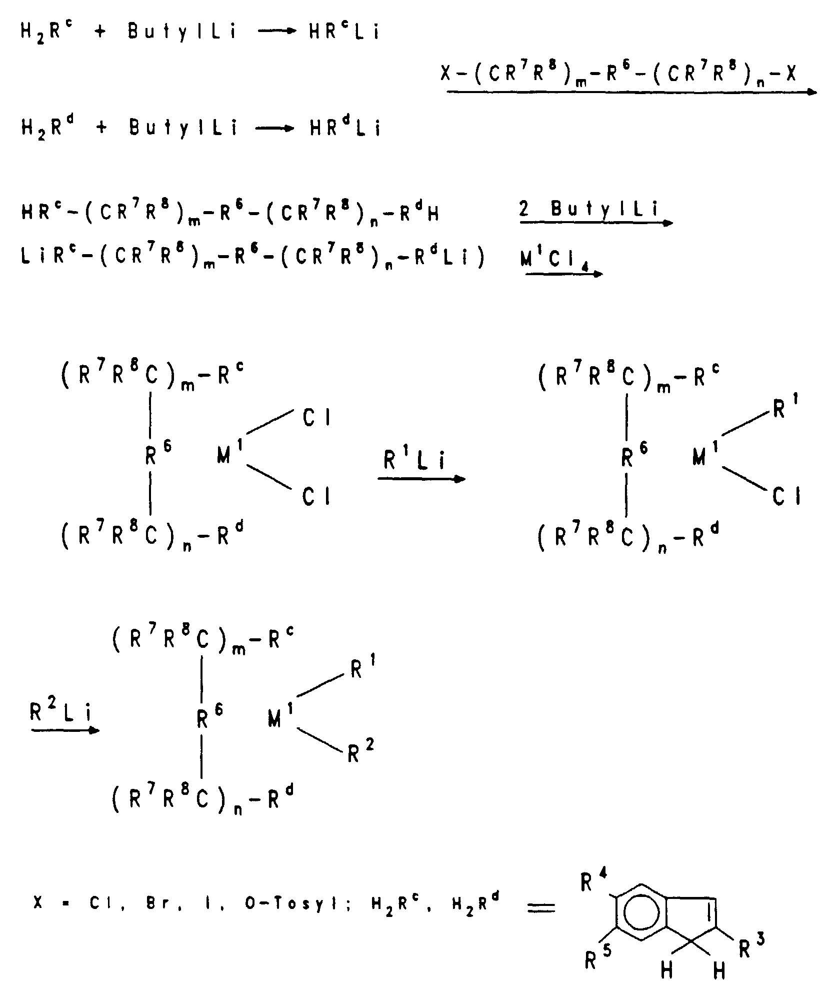 Die Herstellungsverfahren sind literaturbekannt; vgl. Journal of Organometallic Chem. 288 (1985) 63-67, EP-A 320 762 und die Ausführungsbeispiele.

Die Herstellung der Ausgangsverbindungen H₂R^{c} bzw. H₂R^{d} erfolgt beispielsweise gemäß den Ausführungsbeispielen.

Erfindungsgemäß wird als Cokatalysator bevorzugt ein Aluminoxan der Formel (II) 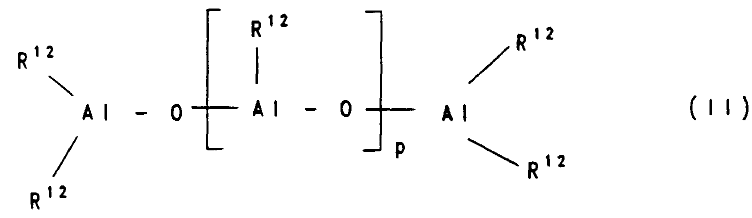 für den linearen Typ und/oder der Formel (III) 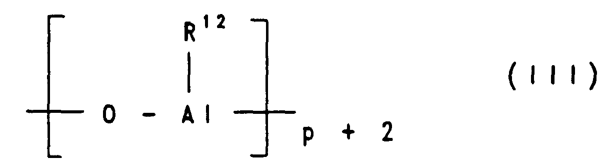 für den cyclischen Typ verwendet, wobei in den Formeln (II) und (III) die Reste R¹² gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R¹² gleich und bedeuten Methyl, Isobutyl, Phenyl oder Benzyl, besonders bevorzugt Methyl.

Sind die Reste R¹² unterschiedlich, so sind sie bevorzugt Methyl und Wasserstoff oder alternativ Methyl und Isobutyl, wobei Wasserstoff bzw. Isobutyl bevorzugt zu 0,01 - 40% (Zahl der Reste R¹⁴) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit veschiedenen Alkylgruppen R¹² werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Erfindungsgemäß können an Stelle oder neben eines Aluminoxans Verbindungen der Formeln RₓNH₄₋ₓBR'₄, RₓPH₄₋ₓBR'₄, R₃CBR'₄ oder BR'₃ als geeignete Cokatalysatoren verwendet werden. In diesen Formeln bedeutet x eine Zahl von 1 bis 4, bevorzugt 3, die Reste R sind gleich oder verschieden, bevorzugt gleich, und bedeuten C₁-C₁₀-Alkyl, C₆-C₁₈-Aryl oder 2 Reste R bilden zusammen mit dem sie verbindenden Atom einen Ring, und die Reste R' sind gleich oder verschieden, bevorzugt gleich, und stehen für C₆-C₁₈-Aryl, das durch Alkyl, Haloalkyl oder Fluor substituiert sein kann.

Insbesondere steht R für Ethyl, Propyl, Butyl oder Phenyl und R' für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator bzw. das aus ihm gebildete Anion keine weiteren Reaktionen mit dem gebildeten Metallocenkation eingehen (vgl. EP-A 427 697).

Zur Entfernung von im Olefin vorhandener Katalystorgifte ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 30 bis 80°C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen. Bei der Herstellung von Homopolymeren ist bevorzugt einer der beiden Reste R^{a} und R^{b} von Wasserstoff verschieden. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler- Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan, genannt.

Weiterhin kann eine Benzin- bzw. hydrierte Dieselölfraktion benutzt werden.

Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene bevorzugt im technisch interessanten Temperaturbereich zwischen 30 und 80°C bei hoher Polymerisationsaktivität Polymere mit dem gewünschten Eigenschaftsspektrum erzeugen. Bevorzugt weisen diese Polymere ein Molekulargewicht M_{w} > 80.000, insbesondere > 100.000 g/mol, einen Schmelzpunkt < 145°C und eine Molmassendispersität M_{w}/Mₙ ≤ 3,5, insbesondere ≤ 2,8 auf.

Die nachfolgenden Beispiele sollen die Erfindung näher erläutern.

Es bedeuten:

| | | |
|---|---|---|
| VZ = | Viskositätszahl in cm³/g | |
| M_{w} = | Molmassengewichtsmittel in g/mol | ermittelt durch Gelpermeations-chromotographie |
| M_{w}/Mₙ = | Molmassendispersität | |
| Schmp. = | Schmelzpunkt ermittelt mit DSC (20°C/min Aufheiz-/Abkühlgeschwindigkeit) | |
| II = | Isotaktischer Index (II = mm+ 1/2 mr) ermittelt durch ¹³C-NMR-Spektroskopie | |
| nᵢₛₒ = | Isotaktische Blocklänge rhr+ 2 mm / | |

### Synthese der in den Beispielen verwendeten Metallocene:

### Allgemeine Bemerkungen:

Alle Lösungsmittel wurden, soweit nicht anders vermerkt, nach üblichen Verfahren getrocknet. Alle Reagenzien wurden bis auf Dimethyldichlorsilan ohne weitere Vorbehandlung eingesetzt. Dimethyldichlorsilan wurde vor Gebrauch über Kaliumcarbonat im Stickstoffstrom destilliert. Die Umsetzungen wurden teilweise gaschromatographisch unter einheitlichen Bedingungen verfolgt: Temperaturprogramm: 120-220°C, 10°C/min, 220-270°C, 40°C/min, Helium, 200 kPa, Säule: HP-1, 50 m.

Zur Unterstützung der Zuordnung von ¹³C-NMR Signalen wurden teilweise DEPT135-NMR Spektren aufgenommen. Die Phasenlage ist in Klammern hinter dem Wert der chemischen Verschiebung angegeben. Dabei bedeutete (0) quart. C, (+) Methyl oder Methin, (-) Methylen.

### Beispiel 1

### Synthese von rac-Dimethylsilandiylbis(2-methyl-5-isobutyl-1-indenyl)zirkondichlorid

### 1.1. (±)-2-Methyl-5-isobutyl-1-indanon (1)

Eine Lösung von 6,7 g (50 mmol) Isobutylbenzol in 30 ml Methylenchlorid wurde unter Eiskühlung mit 17,3 g (125 mmol) Aluminiumtrichlorid versetzt. Anschließend wurden rasch 11,9 g (52 mmol) 2-Bromisobuttersäurebromid zugegeben und 15 h zum Rückfluß erhitzt. Das Reaktionsgemisch wurde auf 100 ml Eiswasser gegossen, mit 25 ml konz. wässr. HCl versetzt und 3mal mit je 50 ml Diethylether extrahiert. Die vereinigten organischen Phasen wurden mit je 50 ml ges. wässr. NaHCO₃- und NaCl-Lösung gewaschen und getrocknet (MgSO₄). Nach Entfernen des Lösemittels am Rotationsverdampfer, wurde das Rohprodukt an 100 g Kieselgel (Hexan/Methylenchlorid 1:1) chromatographiert. Es wurden 8,4 g (83%) 1 als farbloses Öl erhalten.

¹H-NMR (100 MHz, CDCl₃): 7,2-7,7 (m, 3H, arom. H), 3,35 (dd, H-C(3)), 2,70 (m, H-C(3), H-C(2)), 2,58 (d, CH₂-Buⁱ), 1,95 (q, CH-Buⁱ), 1,25 (d, CH₃), 0,93 (d, 2 CH₃-Buⁱ).

### 1.2. 2-Methyl-6-isobutylinden (2)

Eine Lösung von 8,3 g (41 mmol) 1 in 50 ml Tetrahydrofuran/Methanol (2:1) wurden mit 2,4 g (62 mmol) Natriumborhydrid versetzt und 16 h bei Raumtemperatur gerührt. Anschließend wurden 50 ml konz. wässr. HCl zugesetzt und 3mal mit je 50 ml Diethylether extrahiert. Die vereinigten org. Phasen wurden getrocknet (MgSO₄) und am Rotationsverdampfer vom Lösemittel befreit. Der Rückstand wurde in 100 ml Toluol aufgenommen, mit 0,4 g p-Toluolsulfonsäure versetzt und 2 h zum Rückfluß erhitzt. Das Reaktionsgemisch wurde 2mal mit je 50 ml ges. wässr. NaHCO₃-Lösung gewaschen und am Rotationsverdampfer vom Lösemittel befreit. Der Rückstand wurde durch Chromatographie an 400 g Kieselgel (Hexan) gereinigt. Es wurden 7,17 g (95%) 2 als farbloses Öl erhalten.

¹H-NMR (100 MHz, CDCl₃): 6,9-7,1 (m, 3 arom. H), 6,4 (m, H-C(3)), 3,2 (s, 2H-C(1)), 2,45 (d, CH₂-Buⁱ), 2,10 (d, CH₃), 1,9 (m, CH-Buⁱ), 0,95 (d, 2 CH₃-Buⁱ).

### 1.3. Dimethylbis(2-methyl-5-isobutylindenyl)silan (3)

Zu 3,6 g (19 mmol) 2 in 50 ml H₂O- und O₂-freiem Tetrahydrofuran wurden unter Argon 7,8 ml (19 mmol) einer 2,5 molaren Lösung von Butyllithium in Hexan bei Raumtemperatur zugegeben und anschließend noch 2 h bei 50°C bis zum Ende der Gasentwicklung nachgerührt. Die so hergestellte Lithiumverbindung wurde im Verlauf von 4 h bei Raumtemperatur zu einer Lösung von 1,25 g (9,5 mmol) Dichlordimethylsilan in 50 ml H₂O- und O₂-freiem Tetrahydrofuran getropft und 15 h bei Raumtemperatur nachgerührt. Das Lösemittel wurde am Rotationsdampfer entfernt, der Rückstand in 50 ml Diethylether und 50 ml H₂O aufgenommen, die Phasen getrennt und die wässr. Phase 2mal mit je 50 ml Diethylether nachextrahiert. Die vereinigten org. Phasen wurden getrocknet (MgSO₄) und das Lösemittel am Rotationsverdampfer entfernt. Chromatographie an 100 g Kieselgel (Hexan/Methylenchlorid 20:1) lieferte neben 2,1 g Edukt, 1,24 g (75%, bez. auf Umsatz) 3 als farblosen Feststoff. Das ¹H-NMR zeigte, daß ein Gemisch von Diastereoisomeren vorlag.

¹H-NMR (100 MHz, CDCl₃): 6,8-7,6 (m, 6 arom. H), 6,6 (m, H-C(3)), 3,8 (m, H-C(1)), 2,6 (d, 2 CH₃), 2,3 (d, CH₂-Buⁱ), 1,9 (m, CH-Buⁱ), 0,9 (m, CH₃-Buⁱ), -0,2 (m, Si(CH₃)₂).

### 1.4. rac-Dimethylsilandiylbis(2-methyl-5-isobutylindenyl)-zirkondichlorid (4)

Zu 1,24 g (3 mmol) 3 in 50 ml H₂O- und O₂-freiem Tetrahydrofuran wurden unter Argon 2,3 ml (6 mmol) einer 2,5 molaren Lösung von Butyllithium in Hexan bei Raumtemperatur zugegeben und anschließend noch 2 h bei 50°C bis zum Ende der Gasentwicklung nachgerührt. Das Lösemittel wurde im Vakuum einer Ölpumpe entfernt, der Rückstand in H₂O- und O₂-freiem Hexan suspendiert und über eine G3-Fritte filtriert. Der äußerst luftempfindliche Rückstand wurde mehrere Stunden im Vakuum einer Ölpumpe getrocknet und anschließend zu einer auf -78°C vorgekühlten Suspension von 0,67 g (3 mmol) Zirkontetrachlorid in 50 ml H₂O- und O₂-freiem Methylenchlorid gegeben. Es wurde im Verlauf von 15 h auf Raumtemperatur erwärmt, 1 h bei Raumtemperatur nachgerührt und über eine G3-Fritte filtriert und mit 30 ml H₂O- und O₂-freiem Hexan nachgewaschen. Das Filtrat wurde vom Lösemittel im Vakuum einer Ölpumpe befreit und aus wenig H₂O- und O₂-freiem Hexan umkristallisiert. Es wurden 120 mg (7%) rac-(4) als gelbe Kristalle erhalten.

¹H-NMR (100 MHz, CDCl₃): 7,0-7,5 (m, 6 arom. H), 6,9 (s, H-(C(3)), 2,3 (d, CH₂-Buⁱ), 2,1 (s, 2 CH₃), 1,9 (m, CH-Buⁱ), 1,1 (s, Si(CH₃)₂), 0,9 (m, CH₃-Buⁱ). Molmasse: 586⁺, korrektes Zerfallmuster.

### Beispiel 2 Synthese von rac-Methylphenylsilandiylbis-(2-methyl-5-isobutyl-1-indenyl)zirkondichlorid

### 2.1. Methylphenylbis(2-methyl-5-isobutylindenyl)silan (5)

Zu 3,5 g (19 mmol) 2 in 50 ml H₂O- und O₂-freiem Tetrahydrofuran wurden unter Argon 7,6 ml (19 mmol) einer 2,5 molaren Lösung von Butyllithium in Hexan bei Raumtemperatur zugegeben und anschließend noch 2 h bei 50°C bis zum Ende der Gasentwicklung nachgerührt. Die so hergestellte Lithiumverbindung wurde im Verlauf von 4 h bei Raumtemperatur zu einer Lösung von 1,81 g (9,5 mmol) Dichlormethylphenylsilan in 50 ml H₂O- und O₂-freiem Tetrahydrofuran getropft und 15 h bei Raumtemperatur nachgerührt. Das Lösemittel wurde am Rotationsverdampfer entfernt, der Rückstand in 50 ml Diethylether und 50 ml H₂O aufgenommen, die Phasen getrennt und die wässr. Phase 2mal mit je 50 ml Diethylether nachextrahiert. Die vereinigten org. Phasen wurden getrocknet (MgSO₄) und das Lösemittel am Rotationsverdampfer entfernt. Chromatographie an 100 g Kieselgel (Hexan/Methylenchlorid 9:1) lieferte neben 1,0 g Edukt, 1,46 g (44%, bez. auf Umsatz) 5 als farblosen Feststoff. Das ¹H-NMR zeigte, daß ein Gemisch von Diastereoisomeren vorlag.

¹H-NMR (100 MHz, CDCl₃): 7,0-8,0 (m, 11 arom. H), 6,4, 6,6, 6,8 (3m, H-(3)), 4,2, 4,0 (2s, H-C(1)), 2,6 (d, 2 CH₃), 2,15 (m, CH₂-Buⁱ), 1,9 (m, CH-Buⁱ), 1,0 (m, CH₃-Buⁱ), -0,1 (m, SiCH₃).

### 2.2. rac-Methylphenylsilandiylbis(2-methyl-5-isobutylindenyl)-zirkondichlorid (6)

Zu 1,09 g (2 mmol) 5 in 50 ml H₂O- und O₂-freiem Tetrahydrofuran wurden unter Argon 1,8 ml (4 mmol) einer 2,5 molaren Lösung von Butyllithium in Hexan bei Raumtemperatur zugegeben und anschließend noch 2 h bei 50°C bis zum Ende der Gasentwicklung nachgerührt. Das Lösemittel wurde im Vakuum einer Ölpumpe entfernt, der Rückstand in H₂O- und O₂-freiem Hexan suspendiert und über eine G3-Fritte filtriert. Der äußerst luftempfindliche Rückstand wurde mehrere Stunden im Vakuum einer Ölpumpe getrocknet und anschließend zu einer auf -78°C vorgekühlten Suspension von 0,52 g (2 mmol) Zirkontetrachlorid in 50 ml H₂O- und O₂-freiem Methylenchlorid gegeben. Es wurde im Verlauf von 15 h auf Raumtemperatur erwärmt, 1 h bei Raumtemperatur nachgerührt, über eine G3-Fritte filtriert und mit 30 ml H₂O- und O₂-freiem Hexan nachgewaschen. Das Filtrat wurde vom Lösemittel im Vakuum einer Ölpumpe befreit. Nach Abziehen des Lösemittels erhielt man 0,54 g (41%) des Zirkonocens 6 als Mischung der racemischen und der meso-Form im Verhältnis 1:1. Durch Umkristallisation aus Hexan ist die racemische Form erhältlich.

¹H-NMR der Isomerenmischung (100 MHz, CDCl₃): 6,6-8,2 (m, arom. H, H-C(3)), 2,5 (s, CH₃), 2,3 (d, CH₂-Buⁱ), 2,2 (s, CH₃), 2,0 (s, CH₃), 1,9 (m, CH-Buⁱ), 1,0-1,5 (m, SiCH₃, CH₃-Buⁱ).
Molmasse: 648⁺, korrektes Zerfallmuster.

### Beispiel 3 Synthese von rac-Dimethylsilandiylbis(2-methyl-5-tert.-butyl-1-indenyl)zirkondichlorid

### 3.1. (±)-2-(4-tert.-Butyl-benzyl)-propionsäure (7).

Zu einer Lösung von 2,5 g (106 mmol) Natrium in 50 ml H₂O-freiem EtOH wurden bei Raumtemperatur 18,8 g (107 mmol) Diethylmethylmalonat zugetropft. Anschließend wurden 25,0 g (110 mmol) 4-tert.-Butyl-benzylbromid in 20 ml H₂O-freiem EtOH zugetropft und 4 h zum Rückfluß erhitzt. Das Lösungsmittel wurde abgezogen und der Rückstand mit 200 ml H₂O versetzt. Die org. Phase wurde abgetrennt, die wässr. Phase mit NaCl gesättigt und 2mal mit je 100 ml Diethylether extrahiert. Die vereinigten org. Phasen wurde getrocknet (MgSO₄).

Der nach Abziehen des Lösungsmittels verbleibende Rückstand wurde in 50 ml EtOH und 30 ml H₂O aufgenommen und mit 21 g (385 mmol) KOH versetz. Die Reaktionsmischung wurde 4 h zum Rückfluß erhitzt. Das EtOH wurde im Vakuum abgezogen und der Rückstand mit konz. wässr. HCl bis pH 1 angesäuert. Der ausgefallene Niederschlag wurde abgesaugt und am Kugelrohr 30 min. unter starkem Aufschäumen auf 250°C erhitzt. Es wurden 18,8 g (83%) 7 als zähflüssiges Öl erhalten.

¹H-NMR (100 MHz, CDCl₃): 11,5 (s, 1H, COOH), 7,0-7,3 (m, 4H, arom. H), 2,7-3,1 (m, 3H, CH und CH₂), 1,2 (s, 9H, Bu^{t}), 1,1 (d, 3H, CH₃).

### 3.2. (±)-2-Methyl-6-tert.-butyl-indan-1-on (8)

Eine Lösung von 18,7 g (91 mmol) 7 in 20 ml (280 mmol) Thionylchlorid wurde 3 h zum Rückfluß erhitzt. Überschüssiges Thionylchlorid wurde bei 10 mbar entfernt und der ölige Rückstand durch mehrmaliges Abziehen von je 100 ml Toluol im Vakuum von anhaftenden Resten Thionylchlorid befreit.

Das Säurechlorid wurde in 50 ml Toluol aufgenommen und bei 10°C zu einer Suspension von 32 g (241 mmol) Aluminiumtrichlorid in 100 ml Toluol getropft. Nach vollständiger Zugabe wurde noch 3 h zum Rückfluß erhitzt. Die Reaktionsmischung wurde auf 300 g Eis gegossen und mit konz. wässr. HCl bis pH = 1 angesäuert. Die org. Phase wurde abgetrennt und die wässr. Phase 3mal mit je 100 ml Diethylether nachextrahiert. Die vereinigten org. Phasen wurden mit ges. wässr. NaHCO₃-, ges. wässr. NaCl-Lösung gewaschen und getrocknet (MgSO₄). Der nach Entfernen des Lösemittels im Vakuum verbleibende Rückstand wurde durch Destillation im Vakuum einer Ölpumpe gereinigt. Bei 90-98°C/0.1 Torr wurden 5,5 g (33%) 8 als farbloses Öl erhalten.

¹H-NMR (100 MHz, CDCl₃): 7,2-7,8 (m, 3H, arom. H), 3,3 (dd, 1H, β-H), 2,5-2,9 (m, 2H, α- und β-H), 1,2 (m, 12H, Bu^{t} und CH₃).

### 3.3. 2-Methyl-6-tert.-butyl-inden (9)

5,3 g (26 mmol) 8 wurden in 50 ml Tetrahydrofuran/Methanol (2:1) gelöst und bei 0°C unter magn. Rühren mit 1,5 g Natriumborhydrid versetzt und 18 h bei Raumtemperatur gerührt. Die Reaktionsmischung wurde auf Eis gegossen, mit konz. HCl bis pH = 1 versetzt und mehrmals mit Diethylether extrahiert. Die vereinigten org. Phasen wurden mit ges. wässr. NaHCO₃-, NaCl-Lösung gewaschen und getrocknet (MgSO₄). Das Lösungsmittel wurde im Vakuum entfernt und das Rohprodukt ohne weitere Reinigung in 300 ml Toluol aufgenommen, mit 0,1 g p-TsOH versetzt und 1 h unter Rückfluß erhitzt. Die Reaktionsmischung wurde mit 100 ml ges. wässr. NaHCO₃-Lösung gewaschen und das Lösungsmittel im Vakuum entfernt. Das Rohprodukt wurde durch Filtration über 200 g Kieselgel (Hexan) gereinigt. Es wurden 4,8 g (99%) 9 als farbloses Öl erhalten.

¹H-NMR (100 MHz, CDCl₃): 7,0-7,3 (m, 3H, arom. H), 6,4 (m, 1H, H-C(3)), 3,2 (s, 2H, CH₂), 2,1 (s, CH₃), 1,3 (s, 9H, Bu^{t}).

### 3.4. Dimethylbis(2-methyl-5-tert.-butyl-indenyl)silan (10)

Zu 4,7 g (26 mmol) 10 in 30 ml H₂O- und O₂-freiem Tetrahydrofuran wurden unter Argon 10,7 ml (26 mmol) einer 2,5 molaren Lösung von Butyllithium in Hexan bei Raumtemperatur zugegeben und anschließend noch 2h bei 50°C bis zum Ende der Gasentwicklung nachgerührt. Die so hergestellte Lithiumverbindung wurde im Verlauf von 4 h bei Raumtemperatur zu einer Lösung von 1,73 g (13 mmol) Dichlordimethylsilan in 50 ml H₂O- und O₂-freiem Tetrahydrofuran getropft und 15 h bei Raumtemperatur nachgerührt. Das Lösemittel wurde am Rotationsverdampfer entfernt, der Rückstand in 50 ml Diethylether und 50 ml H₂O aufgenommen, die Phasen getrennt und die wässr. Phase 2mal mit je 50 ml Dietyhlether nachextrahiert. Die vereinigten org. Phasen wurden getrocknet (MgSO₄) und das Lösemittel am Rotationsverdampfer entfernt. Flashchromatographie an 350 g Flashkieselgel (Hexan/Methylenchlorid 9:1) lieferte 2,0 g (38%) 10 als farbloses Öl. Das ¹H-NMR zeigte, daß ein Gemisch von Diasteroisomeren vorlag.

¹H-NMR (300 MHz, CDCl₃): 7,2-7,7 (m, 6H, arom. H), 6,8 (m, 2H, H-C(3)), 3,85 (m, 2H, H-C(1)), 2,40 (m, 6H, CH₃), -0,3 (m, 6H, Si(CH₃)₂).

### 3.5. rac-Dimethylsilandiylbis(2-methyl-5-tert.-butyl-1-indenyl)-zirkondichlorid (11)

Zu 2,0 g (5 mmol) 3 in 50 ml H₂O- und O₂-freiem Tetrahydrofuran wurden unter Argon 4 ml (10 mmol) einer 2,5 molaren Lösung von Butyllithium in Hexan bei Raumtemperatur zugegeben und anschließend noch 2 h bei 50°C bis zum Ende der Gasentwicklung nachgerührt. Das Lösemittel wurde im Vakuum einer Ölpumpe entfernt, der Rückstand in H₂O- und O₂-freiem Hexan suspendiert und über eine G3-Fritte filtriert. Der äußerst luftempfindliche Rückstand wurde mehrere Stunden im Vakuum einer Ölpumpe getrocknet und anschließend zu einer auf -78°C vorgekühlten Suspension von 1,2 g (5,1 mmol) Zirkontetrachlorid in 50 ml H₂O- und O₂-freiem Methylenchlorid gegeben. Es wurde im Verlauf von 15 h auf Raumtemperatur erwärmt, 1 h bei Raumtemperatur nachgerührt und über eine G3-Fritte filtriert und mit 30 ml H₂O- und O₂-freiem Hexan nachgewaschen. Das Filtrat wurde vom Lösemittel im Vakuum einer Ölpumpe befreit und aus wenig H₂O- und O₂-freiem Hexan umkristallisiert. Man erhielt 1,05 g (37%) des Zirkonocens 11 als Mischung der racemischen und der meso-Form im Verhältnis 1:1. Durch mehrmalige Umkristallisation aus Hexan ist die racemische Form erhältlich.

¹H-NMR (100 MHz, CDCl₃): 7,0-7,6 (m, 6 arom. H), 6,8 (s, H-C(3)), 2,1 (s, 2 CH₃), 1,0-1,3 (m, Si(CH₃)₂ und CH₃-Bu^{t}). Molmasse 588⁺, korrektes Zerfallmuster.

### Beispiel 4 Synthese von rac-Dimethylsilandiylbis(2,5,6-trimethyl-1-indenyl)zirkondichlorid

### 4.1. 3,4-Dimethylpropionphenon (12)

534 g (4 mol) trockenes Aluminiumchlorid werden mit 500 ml absolutem o-Xylol verrührt. Man stellt die Apparatur in ein Eisbad und beginnt bei einer Innentemperatur von 5°C mit dem Zutropfen von 260 g (2 mol) Propionsäureanhydrid. Dabei soll die Temperatur nicht über 10°C steigen. Nach Beendigung des Zutropfens (ca. 5 Stunden) läßt man über Nacht rühren. Die jetzt tiefdunkelrote Lösung wird zur Aufarbeitung auf 1 kg Eis gegossen. Dabei scheidet sich eine milchige gelbe organische Phase ab. Man rührt noch 1 h. Dabei wird die organische Phase klar und man trennt sie im Scheidetrichter ab. Sie wird mit Wasser gewaschen und dann über Natriumsulfat getrocknet. Im Vakuum (10 Torr) wird zunächst überschüssiges Xylol abdestilliert. Dann setzt man eine kurze Vigreux-Kolonne auf und destilliert das 3,4-Dimethylpropiophenon im Vakuum (4,5 Torr) ab. Ausbeute 225 g, 69% (bezo. Propiophenon), Kp: 94°C (4,5 Torr).
Gaschromatographie:
11.02 min
¹H-NMR (CDCl₃, 100 MHz, RT):
7,5 s(2H),7,06, s(1H), 6,98 s(1H), 2,78 m(2H), 2,13 s (6H), 1,06 t(3H)
¹³C-NMR (CDCl₃, 100 MHz, RT):
199,76(0), 141,83(0), 136,4(0), 134,5(0), 129,37(+), 128,91(+), 125,36(+), 31,23(-), 19,53(+), 19,40(+), 7,99(+)
Massenspektrum:
M⁺: 162, B: 133, 147, 115, 105, 91, 77, 63, 51, 28
IR-Spektrum (Film, KBr-Platten):
3030w, 2978s, 2936s, 2883s, 1682vs, 1608s, 1571m, 1526s, 1454m, 1411m, 1383w, 1350s, 1242s, 1213m, 1176m, 1143m, 1022m, 963m, 904vw, 888vw, 863w, 850w, 797vs, 741vw, 706s, 681w.

### 4.2. 1-(3,4-Dimethylphenyl)-1-oxo-2-methyl-3-dimethylaminopropan (13)

A. Mannich-Salz: 162 g (1 mol) 3,4-Dimethylpropiophenon (12) wird mit 30 g Paraformaldehyd, 97,86g (1,2 mol) Dimethylaminhydrochlorid in 500 ml Ethanol 6 h am Rückfluß gekocht. Dann wird am Rotationsverdampfer die Hälfte des Ethanols abdestilliert, und die Restlösung bei -30°C zum Kristallisieren gestellt. Die ausfallende Kristallmasse wird abgenutscht und mit Aceton gewaschen. Die Mutterlauge wird nochmals eingedampft und wieder zum Kristallisieren gestellt. Die vereinigten Kristallisate werden aus Ethanol umkristallisiert. 255 g (78%).
   ¹H-NMR (400 MHz, CDCl₃, RT)
   7,6 s(1H), 7,58, 7,56 d, J=7,93 Hz(1H), 7,14, 7,12 d, J= 7,93Hz(1H), 3,96 m(1H), 3,53, 3,5, 3,49, 3,47 dd, J_{gem} = 12,18 Hz, J =10,14Hz(1H), 3,08, 3,07, 3,05, 3,04 dd, J_{gem} = 12,82 Hz, J = 5,01 Hz(1H), 2,7 s(br)(1H), 2,53 s(6H), 2,10 "s"(6H), 1,075, 1,057 d, J = 7,32 Hz(3H)
   IR-Spektrum (KBr-Preßling):
   3469w, 3019w, 2971w, 2918m(br), 2865sh, 2781sh, 2628m(br), 2475m, 1672vs, 1604m, 1576m, 1560m, 1482s, 1456m, 1419s, 1382m, 1329s, 1240s, 1192m, 1171m, 1113m, 991s, 933w, 902w, 891w, 860w, 836s, 765w, 627w,
B. Gewinnung der freien Base: 134 g (0,52 mol) des Mannich-Salzes (4.2.A) werden in Portionen zu 3-5 g zu einer eisgekühlten Lösung von 60 g KOH (1,04 mol) in 200 ml dest. Wasser gerührt. Man setzt gelegentlich etwas Ether zu, um der Verklumpung und der damit verbundenen Herabsetzung der Reaktionsgeschwindigkeit vorzubeugen. Man läßt ca. 12 h rühren, und trennt danach die organische Phase ab. Der Ether wird abgedampft, das entstandene Öl verarbeitet man sofort weiter. Ausbeute 109 g (96%). Nach einer Alternativmethode wird die entsprechende Menge Natriumhydroxid in einem Mörser fein gepulvert. Dann rührt man in kleinen Anteilen das Mannich-Salz unter schnellem Reiben ein. Die Masse wird warm und teigig. Je mehr Mannich-Salz man zusetzt, umso flüssiger wird die Masse. Das zuletzt dünnflüssige Öl überführt man in einen Erlenmeyerkolben und rührt noch 2 h. Ausbeute 109 g (96%).

### 4.3. 3,4-Dimethylphenyl-2-methylvinylketon (14)

121 g (0,55 mol) der freien Mannich-Base (13) werden mit 45 g (0,33 mol) wasserfreiem Zinkchlorid durch kräftiges Rühren, das unter Vakuum stattfinden soll, in innigen Kontakt gebracht. Dann wird bei 4,5 Torr destilliert, wobei sich der Inhalt des Destillierkolbens zunehmend intensiv gelb verfärbt. Man destilliert, bis sich die Temperatur des übergehenden Destillats auf über 120°C erhöht. Ausbeute 76 g (78%), 112°C (4,5 Torr).
Gaschromatographie
11.39 min
¹H-NMR (100 MHz, CDCl₃, RT):
7,26 s(1H), 6,9 s(1H), 5,57 s(1H), 5,31 s(1H), 2,02 d(Schulter)(6H), 1,78 s(3H)
¹³C-NMR (CDCl₃, 100 MHz, RT):
197,76, 143,46, 141,11, 136,15, 134,92, 130,18, 128,95, 126,9, 125,60, 19,53, 19,28, 18,38,
Massenspektrum (70eV, EI):
174 M, 133 B, 159, 146, 118, 105, 77, 63, 52, 39, 27.
IR-Spektroskopie (Film in KBr-Platten):
3095w, 3024w, 2975m, 2948m, 2923m, 2877sh, 1654vs, 1625m, 1608s, 1571w, 1497w, 1451s, 1408m, 1338w, 1371w, 1328s, 1236m, 1205m, 1163m, 1122s, 1033m, 884m, 935m(br), 901w, 870w, 849w, 830w, 793s.

Alternative Methode: 53 g (0,25 mol) frisch dargestelltes Amin werden in 300 ml Aceton gelöst. Bei 5°C (Kühlen im Eisbad) werden 34 g (15 ml, 0,28 mol) Methyliodid im Verlaufe einer Stunde zugetropft. Bald nach Beginn der Zugabe fallen weiße Flocken aus. Nach Beendigung der Zugabe läßt man noch ca. 10 h rühren, wobei sich eine dicke weiße Masse abscheidet. Mit Hilfe einer Nutsche wird das Pulver abgetrennt, die Mutterlauge auf die Hälfte konzentriert und dann in den Kühlschrank gestellt. Die sich abscheidende Kristallmasse wird mit der Hauptmenge vereinigt und mit kaltem Aceton gewaschen. Ausbeute 80 g (93%). Da so gewonnene Trimethylammonium-Salz wird in 600 ml Wasser gelöst, dem 40 g Natriumhydrogencarbonat zugesetzt sind. Man überschichtet mit 200 ml Ether und rührt die Mischung über Nacht. Die organische Phase wird dann im Scheidetrichter abgetrennt und destilliert. Ausbeute 37 g, 94%.

### 4.4. 2,5,6-Trimethyl-1-oxoindan und 2,6,7-Trimethyl-1-oxoindan (15)

150 ml konz. Schwefelsäure wird auf 0° C gekühlt. Dann werden 50 g (0,28 mol) 3,4-Dimethylphenyl-2-methylvinylketon (14) im Verlauf einer halben Stunde zugetropft. Die Flüssigkeit färbt sich binnen Minuten intensiv Rot. Nach Beendigung der Zugabe nimmt man den Kolben aus dem Eisbad und läßt noch 20 min rühren. Dabei beobachtet man noch eine Erwärmung auf 40 - 50° C. Man arbeitet durch Eingießen auf Eis auf, die Emulsion wird mit 100 ml Ether dreimal extrahiert. Die vereinigten organischen Phasen werden mit Magensiumsulfat getrocknet und eingedampft.

### Alternativmethoden (gaschromatographische Isomerenbestimmung):

1) 176 g sirupöse Phosphorsäure werden mit 50 g Phosphorpentoxid versetzt. Dabei wird mit einem Eisbad gekühlt und die Zeitabstände zwischen den Zugaben so gewählt, daß die Temperatur nicht über 60° C steigt. Bei 40° C werden 36 g (0,2 mol) des Vinylketons auf einmal zugesetzt. Die Temperatur steigt bis 55° C, bleibt dann bis zu 2 h konstant. Nach Abklingen der Erwärmung wird die tieforange Masse wie oben aufgearbeitet.
2) 150 ml Methansulfonsäure wird auf 0° C abgekühlt. 36 g (0,2 mol) des Vinylketons werden langsam zu der kalten Lösung getropft. Nach Beendigung der Zugabe wird der Kolben aus dem Eisbad genommen. Die Temperatur steigt in kurzer Zeit (ca. 5 min) auf Raumtemperatur. Durch weiteres Kühlen im Eisbad wird er auf dieser Temperatur gehalten. Aufarbeitung wie oben.
Gaschromatographie
12,6 min (2,5,6-trimethyl-1-oxoindan)/ 12,84 min (2,4,5-trimethyl-1-oxoindan)
Massenspektrum (GC-MS)
174 M, 159 B, 146, 131, 115, 103, 91, 77, 63, 52, 39, 27. Die beiden Isomeren unterscheiden sich im Massenspektrum nur im Verhältnis der Intensitäten des Peak mit der Masse 146 zur Intensität des Basispeaks und zum Peak der Masse 131.

### 4.5. 2,5,6-Trimethyl-1-hydroxyindan (16)

Variante A: 48 g (0,27 mol) des unter Abschnitt 4.4. gewonnenen Indanongemisches (15) werden in 400 ml Methanol gelöst und auf 0° C gekühlt. In Portionen von 1 g werden insgesamt 10,75 g (0,27 mol) Natrimboranat in 10 min-Abständen zugesetzt. Gegen Ende der Zugabe werden die Zeitintervalle verlängert. Man rührt, bis die Gasentwicklung abgeklungen ist und gibt dann solange tropfenweise konz. Salzsäure zu, bis keine Gasentwicklung mehr zu beobachten ist. Beim Vedünnen mit 750 ml Wasser fällt ein flockiger Niederschlag aus, der abgenutscht wird. Das Filtrat wird mit Ether extrahiert. Der weiße Niederschlag besteht aus dem Gemisch der isomeren Indanole. Zur Gewinnung des reinen 2,5,6-Trimethylindanols wird wie folgt verfahren: 7,5 g des Niederschlags werden mit Hexan in der Siedehitze zur Sättigung gelöst (53 ml). Man läßt die Lösung durch ruhiges Stehen abkühlen, wobei sich kurze, nadelige Kristalle abscheiden. Man unterbricht den Kristallisationsprozeß durch Abgießen der Mutterlauge, wenn die Lösung noch handwarm ist. Die Kristallmasse enthält nur noch ca. 18 % des 2,6,7-trimethylindanol-Isomer. Man kristallisiert sie nochmals aus Hexan um, jedoch mit 20 % mehr Lösungsmittel als zur Sättigungskonzentration erforderlich und läßt einige Stunden stehen. Dabei scheiden sich lange Kristallnadeln ab. Dieses Produkt enthält nur noch 2 % des ungewünschten Isomers.
Variante B: 48 g (0,27 mol) des Indanongemisches (15) werden in 250 ml Methanol gelöst und auf 0° C gekühlt. In Portionen von 1 g werden insgesamt 10,75 (0,27 mol) Natriumboranat in 10 min-Abständen zugesetzt. Gegen Ende der Zugabe werden die Zeitintervalle verlängert. Nach ca. 4-5 g Natriumboranat wird die Lösung nicht mehr klar. Nach Beendigung der Zugabe läßt man ca. 12 h rühren. Dann nutscht man das entstandene feine Pulver ab. Mit dem Filtrat fährt man wie unter Variante A beschrieben, fort. Ausbeute 10 g, 23 % (reines 2,5,6-trimethylindanol).
¹H-NMR (100 MHz, CDCl₃, RT):
7,13 s(1H), 6,97 s(1H), 4,64 s(1H, breit), 3,0 m(1H), 2,4 m(1H), 2,22 s(6H), 1,13 d, J = 6,44 Hz, (3H).
¹³C-NMR (CDCl₃, 100 MHz, RT):
142,6(0), 139,6(0), 136,5(0), 134,9(0), 125,9(0), 124,9(+), 82,8(+), 45,5(+), 37,5(-), 19,84(+), 19,77(+), 17,93(+)
IR-Spektrum (KBr-Preßling)
3352vs(br), 3010m, 2961m, 2932m, 2907m, 2845m, 1491m, 1450s, 1376w, 1353m, 1330m, 1307, 1282w, 1257w, 1232w, 1195w, 1166w, 1125w, 1080ss, 1031s, 993m, 973w, 940w, 903w, 891m, 874s, 833m, 759w, 640w, 603w(br), 442m.

### 4.6. 2,5,6-Trimethylinden (17)

2,67 g 2,5,6-Trimethyl-1-hydroxyindan (16) nach Abschnitt 4.5. werden in einer Lösung von 15 g Oxalsäure in 100 ml dest. Wasser suspendiert. Dann kocht man 30 min unter Rückfluß. Wenn man beobachtet, daß sich weiße Beläge an der Wand des Kühlers bilden, unterbricht man das Kochen und setzt eine Destillierbrücke mit weitem Kühlerrohr auf. Die Kristallmasse wird durch Abpressen vom Wasser befreit, dann über CaCl₂ getrocknet. Weiße intensiv riechende Substanz. Ausbeute 2 g, 83 %, Analyse: Ber. f. C₁₂H₁₄ (158,2): C 91,13, H: 8,8; gef. C: 90,63, H: 9,0.
Gaschromatographie:
RT: 10,8 min
¹H-NMR: (100 MHz, CDCl₃, RT)
7,31 s(1H), 7,21 s(1H), 6,59 s(1H), 3,38 s(2H), 2,46 s(6H), 2,3 s(3H)
¹³C-NMR: (CDCl₃), 100 MHz, RT)
144,77(0), 143,85(0), 141,0(0), 133,95(0), 131,36(0), 126,8(+), 124,64(+), 120,88(+), 42,2(-), 19,8(+), 19,72(+), 16,61(+)
Massenspektrum (70 eV, EI)
158 M, 143 B, 128, 115, 102, 89, 77, 63, 52, 39, 28
IR-Spektrum (KBr-Preßling)
3060w, 3013w, 2961w, 2909m, 2852m, 1621w, 1604w, 1473s, 1450s, 1384s, 1345sh, 1289w, 1254w, 1206m, 1175w, 1128w, 1020m, 996m(br), 919w, 880s(br), 818w, 756w, 721m, 613m, 555w, 427ss.

### 4.7. 2,5,6-Trimethylindenyl-dimethylchlorsilan (18)

2,33 g (14 mmol) des sehr gut getrockneten Indens (17) werden in 50 ml Hexan gelöst. Nach Abkühlen in einem Eisbad auf 0° C setzt man 7 ml 2 M n-Butyllithium zu (14 mmol). Man rührt 3 h währenddesen sich ein dicker, leicht gelber Niederschlag bildet. Das Lithiumsalz wird abgesaugt und dreimal mit Hexan gewaschen. 6 ml Dimethyldichlorsilan (frisch über Kaliumcarbonat destilliert) in 50 ml Ether werden auf -35° C gekühlt. In diese Lösung bringt man portionsweise das trockene Lithiumsalz ein. Zunächst löst sich noch alles auf, später trübt sich die Lösung. Nach dem Aufwärmen auf Raumtemperatur läßt man noch ca. 12 h rühren. Der Ether wird bis auf 1/4 des Volumens am Vakuum abgezogen, das ausgefallene Lithiumchlorid abgesaugt. Die leicht zitronengelbe Flüssigkeit wird bis zur öligen Konsistenz eingedampft und dann noch einige Stunden unter Rühren am Vakuum belassen.
¹H-NMR (400 MHz, CDCl₃, RT)
7,35 s(1H), 7,2 s(1H), 6,63 s(1H), 3,55 s(1H), 2,4 m(9H), 0,52 s(3H), 0,23 s(3H) s(3H)
¹³C-NMR: (CDCl₃, 400 MHz, RT)
144,47(0), 143,36(0), 140,12(0), 133,83(0), 131,11(0), 127,05(+), 124,6(+), 121,05(+), 49,26(+), 20,08(+), 19,93(+), 17,47(+), 1,04(+), -0,77(+)
Massenspektrometrie (70 eV, EI)
65,1(6,1 %), 77,1(2,3), 93,1(B), 94,1(6,9), 95,0(34,7), 115,1(9,2), 128,0(9,2), 141,3(24,5), 142,2(15,6), 143,2(15,0), 155,2(8,9), 156,2(72,8), 157,3(32,3), 158,3(19,6), 235,0(1,8), 250,4(61,2)M, 251,3(12,5)M, 252,3(22,3)M, 253,4(4,2)M

### 4.8. Bis-(2,5,6-trimethylindenyl)dimethylsilan (19)

2,61 g (10 mmol) des nach Abschnitt 4.7. hergestellten Indenyldimethylchlorsilans (18) werden in 60 ml Ether gelöst. Diese Lösung wird mit 1,77 g des Indenyllithium-Salzes (Abschnitt h) versetzt. Bei 0° C werden noch 30 ml THF zugesetzt, dann läßt man aufwärmen und ca. 12 h rühren. Das flockige Indenyllithium löst sich bei THF-Zugabe auf, gleichzeitig erscheint ein leichter rötlicher Pastellton. Bald darauf fällt feinkristallines Lithiumchlorid aus. Zur NMR-spektroskopischen Kontrolle der Umsetzung nimmt man zwei oder drei Proben. Anhand des Auftauchens bzw. Verschwindens der 3 bzw. 2 Peaks bei -0.39 bzw. 0.62/0.34 ppm (Chlorsilan) kann man den Reaktionsfortschritt verfolgen. Man zieht das Lösungsmittel bis auf 30 ml ab und trennt die Flüssigkeit vom Lithiumchlorid. Sie wird dann mit 20 - 30 g Kieselgel G-60 versetzt. Der Feststoff wird vom Lösungsmittel befreit. In einer G-3 Fritte (3 cm) schüttet man in Pentan eine 10 cm starke Schicht von Kieselgel G-60 auf. Darauf gibt man die vorher bereitete Kieselgel/Produktmischung. Man gibt 100 ml Pentan auf und verwirft das Eluat. Daraufhin eluiert man mit Pentan: Methylenchlorid (100 ml + 5 ml) eine gelbliche Zone. Man steigert die Methylenchloridkonzentration auf 10/1 dann 10/2 und setzt je 100 ml davon ein.

Die letzten 30 bis 40 ml Eluat vor der gelben Zone werden separat aufgefangen; sie enthalten nicht umgesetztes Inden. Das gelbe Eluat scheidet beim Einengen feine weiße Kristalle aus. Diese werden abgenutscht und getrocknet. Es handelt sich um reines Diastereomer. Die Mutterlauge wird einer erneuten chromatographischen Reinigung unterzogen. Ausbeute 1,2 g (32 %). Bei Verringerung der Lösungsmittelmenge auf 1/3 kann aus dem dann in großer Menge anfallenden Niederschlag nach Abfritten und Trocknen reines Diastereomer gewonnen werden, indem man mit Methylenchlorid extrahiert. Eine chromatographische Reinigung entfällt dann. Ausbeute 1,6 g (45 %). Die Mutterlauge wird wie oben aufgearbeitet. Gesamtausb. 2,5 g (67 %).
Analyse: Ber. f. C₂₆H₃₂Si: C: 83,8 H: 8,6 Si: 7,5; gef. C: 83,2 H: 8,9 Si: 7,3
¹H-NMR (100 MHz, CDCl₃, RT)
7,18 s(2H), 7,07 s(2H), 6,48 s(2H), 3,57 s(2H), 2,23 s(6H), 2,19 s(6H), 2,11 s(6H), -0,39 s(6H) ein Diastereomer
¹³C-NMR: (CDCl₃, 100 MHz, RT)
145,97(0), 143,43(0), 142,62(0), 133,2(0), 130,2(0), 130,85(0), 126,36(+), 124,47(+), 120,97(+), 46,51(+), 20,12(+), 19,94(+), 17,86(+), 0,94(+)
Massenspektrometrie (70 eV, EI)
59,3(49,1), 84,1(2,2), 115,1(1,1), 128,1(1,3), 141,2(5,6), 142,3(5,4), 143,2(2,1), 145,3(1,0), 155,3(10,7), 156,2(4,5), 157,2(5,4), 171,1(1,3), 172,1(0,7), 173,1(9,7), 174,1(2,3), 175,1(1,0), 185,1(4,1), 186,2(6,0), 186,7(1,7), 187,1(25,8), 188,1(4,7), 197,3(1,3), 199,1(4,4), 200,3(4,4), 214,3(3,9), 215,3(100,0; B), 216,3(47,6), 217,3(12,0), 218,3(1,3), 372,3(45,0)M, 373,4(14,6)M, 374,4(3,7)M
IR-Spektrum (KBr-Preßling)
3058w, 3004m, 2960m, 2921s, 2858m, 1588m, 1468s, 1438m, 1411sh, 1379w, 1293w, 1248s, 1181w, 1164m, 1120m, 1099sh, 1038vs, 1008vs, 913m, 875vs, 844m, 816vs, 778m, 742w, 702w, 669vw, 637w, 622vw

### 4.9. rac-Dimethylsilandiylbis-(2,5,6-trimethyl-1-indenyl)zirkondichlorid (20)

0,80 g (2,16 mmol) des Bis-(2,5,6-trimethyl-1-indenyl)dimethylsilans (19) werden in 100 ml eines Ether/THF-Gemisches (2 + 1 Volumenteile) gelöst. Es werden 2,68 ml n-Butyllithium (5,37 mmol, 25 % Überschuß) tropfenweise zugesetzt, wobei sich die Lösung rot färbt. Nach 4 - 5 h wird im Vakuum bis zur Trockne eingeengt. Die schaumige Masse wird mit einem Spatel grob zerstoßen und mit 10 ml Ether verrührt. Die Farbe geht dabei schlagartig in beige über. Beim Abziehen des Lösungsmittels erhält man jetzt ein feines Pulver. Es wird dreimal mit Hexan aufgeschlämmt. Solange sich die Flüssigkeit gelb färbt, wird sie über eine Fritte abgezogen. Wenn das Filtrat farblos ist, wird das Dilithiosalz im Vakuum getrocknet. 550 mg ZrCl₄ werden zu 50 ml Methylenchlorid gegeben. Die Suspension wird auf -50° C abgekühlt. Portionsweise wird dann das Dilithiosalz zugesetzt. Die Suspension wird bald orangefarben. Man läßt über einen Zeitraum von 3 - 4 h aufwärmen und rührt über Nacht. Es hat sich eine kräftig orangefarbene Lösung mit einem feinen Niederschlag gebildet. Die Lösung wird abfiltriert und im Vakuum eingedampft. Zu dem gelben Staub setzt man 15 ml Toluol und 4 - 5 ml Hexan zu. Es fällt wieder ein Niederschlag aus, der nicht mehr in organischen Medien löslich ist. Es wird wieder filtriert und getrocknet. Man löst wieder in Methylenchlorid/Hexan, wobei man 3 ml Hexan vorlegt und steigende Mengen Methylenchlorid zusetzt, bis maximale Löslichkeit erreicht ist. Nochmaliges Filtrieren ergibt eine Lösung, aus der beim Einengen ein mikrokristallines gelbes Pulver anfällt. Dieses wird abdekantiert und am Vakuum getrocknet.

### Alternative Aufarbeitungsmethode:

Die Reaktionslösung wird auf eine Fritte überführt, die Flüssigkeit abgezogen, der Fritteninhalt 4 x mit einem Lösungsmittelgemisch Hexan/Methylenchlorid (1 + 1, 40 ml) extrahiert. Diese Extrakte vereinigt man und zieht das Lösungsmitel ab, bis eine Trübung entsteht. Die Lösung stellt man über Nacht in den Kühlschrank bei -30° C.
Den nach etwa 2 h gebildeten orangen Kristallüberzug an den Wänden des Schlenkrohres löst man in der eben hinreichenden Menge Methylenchlorid, gibt noch 2 ml dazu und kristallisiert wieder einige Tage durch Abkühlen auf -36° C. Dieses sehr reine meso-Produkt versetzt man mit wenigen ml Toluol und erwärmt auf etwa 60° C. Hat sich alles aufgelöst, stellt man das Schlenkrohr in ein Dewargefäß mit warmem Wasser von derselben Temperatur. Nach etwa einer Woche erhält man rautenförmige Kristalle von meso-Produkt.
Analyse: Ber. f. C₂₆H₃₀SiCl₂Zr•1/2 CH₂Cl₂ (483,44): C: 55,0, H: 5,34, Zr: 16,0. Gef. C: 55,35, H: 5,34, Zr: 15,93
¹H-NMR (400 MHz, CDCl₃, RT)
7,38 s(2H), 7,19 s(2H), 6,53 s(2H), 2,38 s(6H), 2,22 s(6H), 2,13 s(6H), 1,4 s(3H), 1,16 s(3H)
¹³C-NMR: (CDCl₃, 400 MHz, RT)
136,83, 136,23, 135,0, 133,76, 127,3, 125,5, 123,6, 118,55, 83,18, 20,79, 20,32, 18,94, 2,79, 2,69
Massenspektrometrie (70 eV, EI)
536(8,9), 535(6,0), 534(19,1), 533(12,7), 532(28,7), 531(14,5), 530(24,6), 216(21,8), 215(100), 519(3,2), 518(1,8), 517(4,4), 516(2,3), 515(4,3), 373(7,1), 372(18,4), 371(3,3), 315(4,3), 314(16,5), 252(13,3), 251(10,0), 250(32,4), 249(6,1), 187(13,3), 183(6,8), 173(12,7), 169(8,3), 159(28,3), 158(91,7), 157(74,2), 156(54,2), 155(19,3), 144(10,5), 143(73,3), 142(33,2), 141(42,6), 129(11,8), 128(34,0), 127(8,3), 115(23,8), 95(22,1), 93(65,0), 73(11,4), 71(11,4), 60(47,0), 58(40,1), 57(24,00), 56(19,3), 55(11,8),
Alternativmethode zur Gewinnung beider Isomere: Die eingangs angegebenen Mengen ZrCl₄ und Dilithiosalz werden in Toluol bei 0° C suczessive vereinigt, wobei ZrCl₄ vorgelegt und 12 h bei Raumtemperatur gerührt wird. Die Suspension verfärbt sich nach den ersten Zugaben gelb. Die Färbung entwickelt sich zu einem sehr intensiven Farbton, so daß die Lösung dunkel erscheint, sobald etwa die Hälfte des Dilithiosalzes zugegeben ist. Man läßt gut absitzen und filtriert die Lösung. Die orange Lösung wird auf 1/3 des Volumens im Vakuum eingedampft und bei - 36° C zum Kristallisieren gestellt. Es bilden sich ein gelber feiner Staub und große orange Kristalle. Man trennt die gelbe feine rac-Verbindung durch Aufschütteln und Abdekantieren.

### Polymerisationsbeispiele

### Beispiel 5

Ein trockener 16 dm³-Reaktor wurde mit Stickstoff gespült und mit 10 dm³ flüssigem Propylen befüllt. Dann wurden 30 cm³ toluolische Methylaluminoxanlösung (entsprechend 40 mmol Al, mittlerer Oligomerisierungsgrad n = 19) zugegeben und der Ansatz bei 30° C 15 Minuten gerührt. Parallel dazu wurden 1,8 mg rac-Dimethylsilandiylbis(2,5,6-trimethyl-1-indenyl)zirkondichlorid in 15 cm³ toluolischer Methylaluminoxanlösung (20 mmol Al) gelöst und durch 15 minütiges Stehenlassen voraktiviert. Die Lösung wurde dann in den Reaktor gegeben, durch Wärmezufuhr auf 70° C aufgeheizt (100 C/min) und das Polymerisationssystem 1 h bei 70° C gehalten. Gestoppt wurde die Reaktion durch schnelles Abgasen des überschüssigen Monomeren. Die Aktivität des Metallocens betrug 27,8 kg PP/g Metallocen x h.
VZ = 101 cm³/g; M_{w} = 100 000 g/mol; M_{w}/Mₙ = 2,5; Schmelzpunkt = 130° C; II = 89,0 %; nᵢₛₒ = 16.

### Beispiel 6

Beispiel 5 wurde mit 4,4 mg des Metallocens wiederholt, die Polymerisationstemperatur war 50° C und die Metallocenaktivität betrug 5,2 kgPP/g Metallocen x h.
VZ = 181 cm³/g; M_{w} = 204 000 g/mol; M_{w}/Mₙ = 2,5; Schmelzpunkt = 139° C; II = 90,6 %; nᵢₛₒ = 20.

### Beispiel 7

Beispiel 5 wurde mit 10,0 mg des Metallocens rac-Dimethylsilandiylbis(2-methyl-5-isobutyl-1-indenyl)zirkondichlorid wiederholt. Die Metallocenaktivität war 40,0 kgPP/g Metallocen x h.
VZ = 144 cm³/g; M_{w} = 168 000 g/mol; M_{w}/Mₙ = 2,1; Schmelzpunkt = 140° C; II = 92,8 %; nᵢₛₒ = 25.

### Beispiel 8

Beispiel 5 wurde mit 10,0 mg des Metallocens rac-Methylphenylsilandiylbis(2-methyl-5-isobutyl-1-indenyl)zirkondichlorid wiederholt. Die Metallocenaktivität war 54,5 kgPP/g Metallocen x h.
VZ = 225 cm³/g; M_{w} = 289 000 g/mol; M_{w}/Mₙ = 2,3; Schmelzpunkt = 138° C; II = 91,5 %; nᵢₛₒ = 22.

### Beispiel 9

Beispiel 5 wurde mit 20,2 mg des Metallocens rac-Dimethylsilandiylbis(2-methyl-5-tert.-butyl-1-indenyl)zirkondichlorid wiederholt. Die Metallocenaktivität war 59,4 kgPP/g Metallocen x h.
VZ = 132 cm³/g; M_{w} = 146 000 g/mol; M_{w}/Mₙ = 2,2; Schmelzpunkt = 139° C; II = 91,0 %; nᵢₛₒ = 22.

### Beispiel 10

Es wurde verfahren wie in Beispiel 5, das Propylen wurde jedoch zuvor in einer gerührten 200 Ndm³-Vorratsschleuse mit 0.5 mmol AlMe₃/Ndm³ flüssigem Propylen bei Raumtemperatur eine Stunde lang gereinigt (Entfernung von Katalysatorgiften) und dann in den Reaktor kondensiert. Die Aktivität des Metallocens betrug 254 kg PP/g Metallocen x h.
VZ = 155 cm³/g; M_{w} = 143 000 g/ mol, M_{w}/Mₙ = 2.2; Schmelzpunkt = 132°C.

### Beispiel 11

Es wurde verfahren wie in Beispiel 10, die Polymerisationstemperatur war jedoch 50°C. Die Aktivität des Metallocens betrug 94.5 kg PP/g Metallocen x h.
VZ = 268 cm³/g; M_{w} = 332 500 g/ mol, M_{w}/Mₙ = 2.4; Schmelzpunkt = 139°C.

### Beispiel 12

Es wurde verfahren wie in Beispiel 10, die Polymerisationstemperatur war jedoch 30°C. Die Aktivität des Metallocens war 41 kg PP/g Metallocen x h.
VZ = 396 cm³/g; M_{w} = 419 500 g/ mol, M_{w}/Mₙ = 2.1; Schmelzpunkt = 144°C.

### Beispiel 13

Es wurde verfahren wie in Beispiel 10, zusätzlich wurden 2,5 Ndm³ Wasserstoff vor der Polymerisation in den Reaktor dosiert (Molmassenregelung). Die Aktivität des Metallocens betrug 302.5 kg PP/g Metallocen x h.
VZ = 104 cm³/g; M_{w} = 102 500 g/ mol, M_{w}/Mₙ = 2.0; Schmelzpunkt = 134°C.

### Beispiel 14

Es wurde verfahren wie in Beispiel 10, während der Polymerisation wurden jedoch zusätzlich 15 kg Ethylen kontinuierlich zudosiert. Die Metallocenaktivität war 235 kg Ethylen-Propylen-Copolymer/g Metallocen x h.
VZ = 98 cm³/g; Schmelzpunkt = 123°C; Ethylengehalt (nach IR-Analytik) = 2.8 Gew.-%.

### Beispiel 15

Ein trockener 150 dm³-Reaktor wurde mit Propylen gespült und bei 20°C mit 80 dm³ eines entaromatisierten Benzinschrittes mit dem Siedebereich 100-120°C gefüllt. Nach Zugabe von 50 l flüssigem Propylen wurden 64 cm³ toluolische Methylaluminoxanlösung (entsprechend 100 mmol Al, mittlere Molomasse nach kryoskopischer Bestimmung 1105 g/mol) zugegeben und der Reaktorinhalt auf 50°C aufgeheizt. Durch Zudosierung von Wasserstoff wurde ein Wasserstoffgehalt im Gasraum des Reaktors von 0.1 % eingestellt und später dann durch Nachdosierung während der Polymerisationszeit konstant gehalten (Überprüfung on-Line durch Gaschromatographie).
18.5 mg rac-Dimethylsilandiylbis(2,5,6-trimethyl-1-indenyl)zirkondichlorid, gelöst in 32 ml toluolischer Methylaluminoxanlösung (entsprechend 50 mmol Al), wurden dann in den Reaktor gegeben.
Durch Kühlung wird der Reaktor 10 h bei 58°C gehalten, zur Wasserstoffentfernung wurde dann auf 3 bar Reaktordruck abgegast, ferner wurde auf 45°C abgekühlt, 2.5 kg Ethylen zudosiert und ohne weitere Wasserstoffdosierung wurden noch 5 h polymerisiert.
Dann wurde die Polymerisation mit CO₂-Gas gestoppt, das gebildete Polymer über eine Drucknutsche vom Suspensionsmedium abgetrennt und 24 h bei 80°C/200 mbar getrocknet. Es wurden 17.5 kg Copolymerpulver, entsprechend einer mittleren Metallocenaktivität von 63.1 kg Blockcopolymer/g Metallocen x h, erhalten.
VZ = 174 cm³/g; Schmelzpunkt 135°C, Glasübergangstemperatur bei -39°C. Das Blockcopolymer enthält 11.6 Gew.-% Ethylen. Die Fraktionierung ergab einen Gehalt von 30.5 Gew.-% Ethylen/Propylen-Kautschuk.

### Beispiel 16

Es wurde verfahren wie in Beispiel 10, als Metallocen wurden jedoch 10.8 g rac-Dimethylsilandiylbis(2-methyl-5-phenyl-1-indenyl)zirkondichlorid verwendet. Die Aktivität des Metallocens betrug 139 kg PP/ g Metallocen x h.
VZ = 157 cm³/g; M_{w} = 187 500 g/ mol, M_{w}/Mₙ = 2.0; Schmelzpunkt = 139°C.

### Beispiel 17

Es wurde verfahren wie in Beispiel 16, als Metallocen wurden jedoch 15.4 mg rac-Dimethylsilandiylbis(2-methyl-6-phenyl-1-indenyl)-zirkondichlorid verwendet. Die Aktivität des Metallocens betrug 69.5 kg PP/g Metallocen x h.
VZ = 187 cm³/g, Schmelzpunkt 143°C.

## Patentansprüche

1. Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I ist, 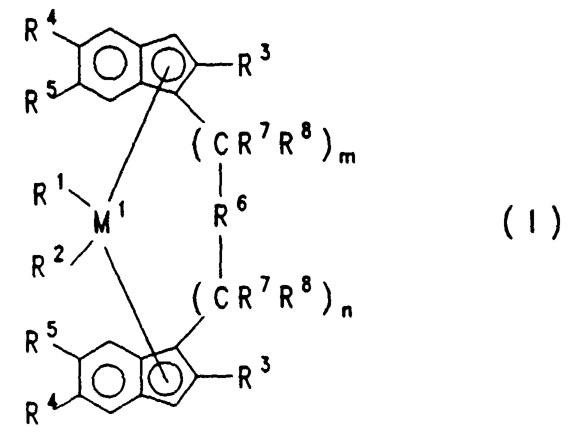 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³, R⁴ und R⁵ gleich oder verschieden sind und R³ und R⁴ und/oder R⁵ von Wasserstoff verschieden sind und eine C₁-C₂₀-Alkylgruppe, eine C₆-C₂₀-Arylgruppe, eine C₂-C₁₀-Alkyenylgruppe, eine C₇-C₄₀-Arylalkylgruppe, eine C₇-C₄₀-Alkylarylgruppe oder eine C₈-C₄₀-Arylalkenylgruppe bedeuten, wobei diese Reste auch halogeniert sein können,
R⁴ oder R⁵ kann auch Wasserstoff sein,
R⁶ 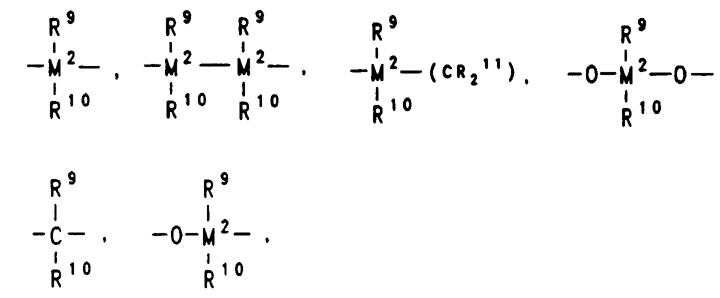
=BR⁹, =AlR⁹, -Ge-, -Sn-, -O-, -S-, =SO, =SO₂, =NR⁹, =CO, = PR⁹ oder = P(O)R⁹ ist,
wobei
R⁹, R¹⁰ und R¹¹ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁹ und R¹⁰ oder R⁹ und R¹¹ jeweils mit den sie verbindenden Atomen einen Ring bilden,
M² Silizium, Germanium oder Zinn ist,
R⁷ und R⁸ gleich oder verschieden sind und die für R⁹ genannte Bedeutung haben und
m und n gleich oder verschieden sind und null, 1 oder 2 sind, wobei m plus n null, 1 oder 2 ist.

2. Verfahren gemäß Anspruch 1, dadurch gekennzeichnet, daß in Formel I M¹ Zr oder Hf, R¹ und R² gleich oder verschieden sind und (C₁-C₃)-Alkyl oder Chlor, R³ und R⁴ gleich oder verschieden sind und (C₁-C₁₀)-Alkyl, das halogeniert sein kann, R⁵ Wasserstoff oder (C₁-C₁₀)-Alkyl, das halogeniert sein kann, R⁶ einen Rest 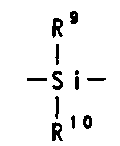 bedeuten, und R⁹ und R¹⁰ gleich oder verschieden sind und (C₁-C₁₀)-Alkyl oder (C₆-C₁₀)-Aryl bedeuten.

3. Verfahren gemäß Anspruch 1 oder 2, dadurch gekennzeichnet, daß als Cokatalysator ein Aluminoxan der Formel (II) 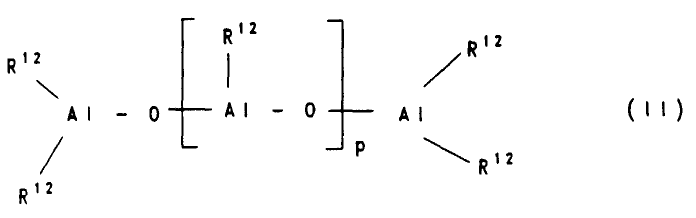 für den linearen Typ und/oder der Formel (III) 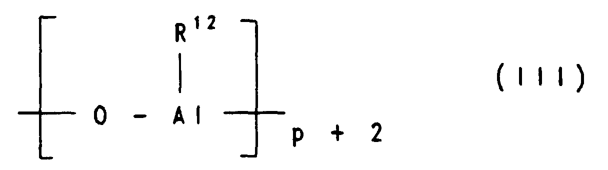 für den cyclischen Typ verwendet wird,
wobei in den Formeln (II) und (III) die Reste R¹² gleich oder verschieden sind und eine C₁-C₆-Alkylgruppe, eine C₆-C₁₈-Arylgruppe, Benzyl oder Wasserstoff bedeuten und p eine ganze Zahl von 2 bis 50 ist.

4. Verfahren gemäß einem oder mehreren der Ansprüche 1 bis 3, dadurch gekennzeichnet, daß als Cokatalysator Methylaluminoxan verwendet wird.

5. Verfahren gemäß Anspruch 3 oder 4, dadurch gekennzeichnet, daß das Metallocen der Formel I vor dem Einsatz in der Polymerisationsreaktion mit einem Aluminoxan der Formel II und/oder III voraktiviert wird.

6. Olefinpolymer, herstellbar nach dem Verfahren gemäß einem oder mehreren der Ansprüche 1 bis 5.

7. Verwendung eines Metallocens der Formel I gemäß einem oder mehreren der Ansprüche 1 bis 5 als Katalysator bei der Olefinpolymerisation.

8. Verbindung der Formel I 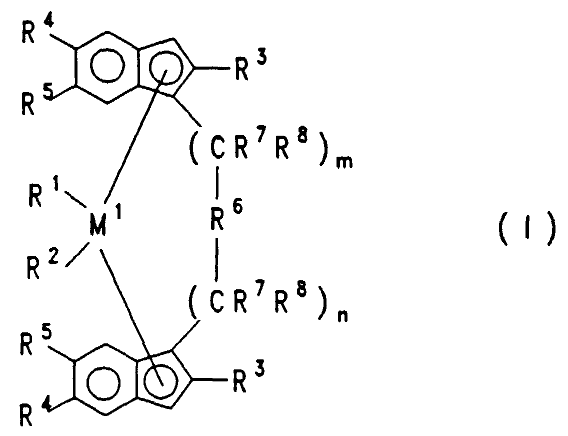 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³, R⁴ und R⁵ gleich oder verschieden sind und R³ und R⁴ und/oder R⁵ von Wasserstoff verschieden sind und eine C₁-C₂₀-Alkylgruppe, eine C₆-C₂₀-Arylgruppe, eine C₂-C₁₀-Alkyenylgruppe, eine C₇-C₄₀-Arylalkylgruppe, eine C₇-C₄₀-Alkylarylgruppe oder eine C₈-C₄₀-Arylalkenylgruppe bedeuten, wobei diese Reste auch halogeniert sein können,
R⁴ oder R⁵ kann auch Wasserstoff sein,
R⁶ 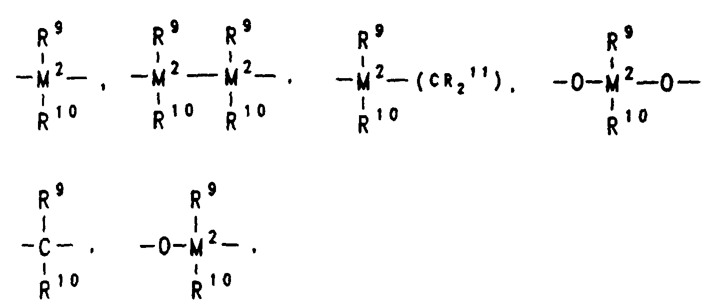
=BR⁹, =AlR⁹, -Ge-, -Sn-, -O-, -S-, =SO, =SO₂, =NR⁹, =CO, =PR⁹ oder =P(O)R⁹ ist,
wobei
R⁹, R¹⁰ und R¹¹ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁹ und R¹⁰ oder R⁹ und R¹¹ jeweils mit den sie verbindenden Atomen einen Ring bilden,
M² Silizium, Germanium oder Zinn ist,
R⁷ und R⁸ gleich oder verschieden sind und die für R⁹ genannte Bedeutung haben und
m und n gleich oder verschieden sind und null, 1 oder 2 sind, wobei m plus n null, 1 oder 2 ist.

9. Verbindung gemäß Anspruch 8, dadurch gekennzeichnet, daß in Formel I M¹ Zr oder Hf, R¹ und R² gleich oder verschieden sind und (C₁-C₃)-Alkyl oder Chlor, R³ und R⁴ gleich oder verschieden sind und (C₁-C₁₀)-Alkyl, das halogeniert sein kann, R⁵ Wasserstoff oder (C₁-C₁₀)-Alkyl, das halogeniert sein kann, R⁶ einen Rest 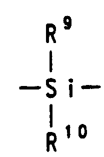 bedeuten, und R⁹ und R¹⁰ gleich oder verschieden sind und (C₁-C₁₀)-Alkyl oder (C₆-C₁₀)-Aryl bedeuten.

10. Katalysator, welcher aus einem Metallocen gemäß Anspruch 8 oder 9 und einem Cokatalysator gebildet wird.

11. Katalysator gemäß Anspruch 10, worin das Metallocen auf einen Träger aufgebracht ist.

12. Katalysator gemäß Anspruch 10 oder 11, worin das Metallocen vorpolymerisiert ist.

## Claims

1. A process for preparing an olefin polymer by polymerization or copolymerization of an olefin of the formula R^{a}-CH=CH-R^{b}, where R^{a} and R^{b} are identical or different and are each a hydrogen atom or a hydrocarbon radical having from 1 to 14 carbon atoms, or R^{a} and R^{b} together with the atoms connecting them can form a ring, at a temperature of from -60 to 200°C, at a pressure of from 0.5 to 100 bar, in solution, in suspension or in the gas phase, in the presence of a catalyst which is formed from a metallocene as transition metal compound and a cocatalyst, wherein the metallocene is a compound of the formula I, 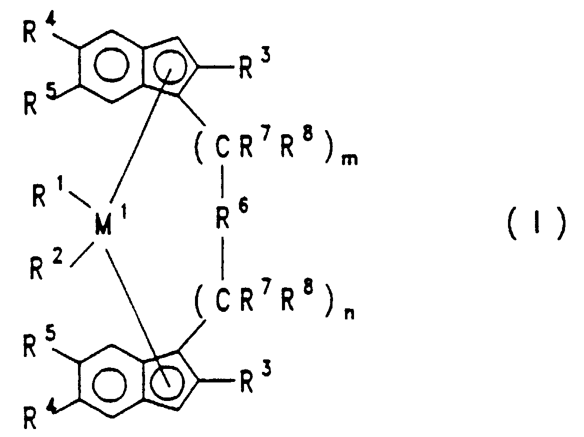 where
M¹ is a metal of group IVb, Vb or VIb of the Periodic Table,
R¹ and R² are identical or different and are each a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³, R⁴ and R⁵ are identical or different and R³ and R⁴ and/or R⁵ are different from hydrogen and are each a C₁-C₂₀-alkyl group, a C₆-C₂₀-aryl group, a C₂-C₁₀-alkenyl group, a C₇-C₄₀-arylalkyl group, a C₇-C₄₀-alkylaryl group or a C₈-C₄₀-arylalkenyl group, where these radicals may also be halogenated,
R⁴ or R⁵ can also be hydrogen,
R⁶ is 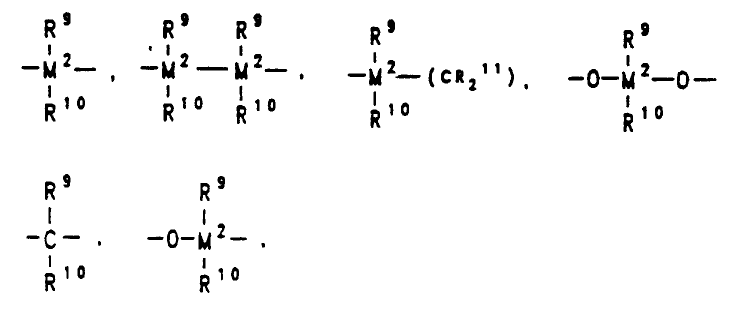 = BR⁹, =AIR⁹, -Ge-, -Sn-, -O-, -S-, =SO, =SO₂, =NR⁹, =CO, =PR⁹ or =P(O)R⁹
where
R⁹, R¹⁰ and R¹¹ are identical or different and are each a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group, a C₇-C₄₀-alkylaryl group or R⁹ and R¹⁰ or R⁹ and R¹¹, in each case together with the atoms connecting them, form a ring,
M² is silicon, germanium or tin,
R⁷ and R⁸ are identical or different and are as defined for R⁹ and
m and n are identical or different and are zero, 1 or 2, where m + n is zero, 1 or 2.

2. The process as claimed in claim 1, wherein, in formula I, M¹ is Zr or Hf, R¹ and R² are identical or different and are C₁-C₃-alkyl or chlorine, R³ and R⁴ are identical or different and are C₁-C₁₀-alkyl which may be halogenated, R⁵ is hydrogen or C₁-C₁₀-alkyl which may be halogenated, R⁶ is a radical 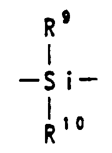 and R⁹ and R¹⁰ are identical or different and are C₁-C₁₀-alkyl or C₆-C₁₀-aryl.

3. The process as claimed in claim 1 or 2, wherein the cocatalyst used is an aluminoxane of the formula (II) 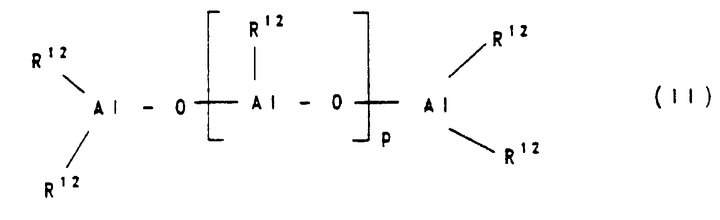 for the linear type and/or the formula (III) 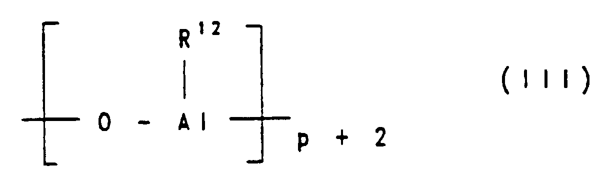 for the cyclic type,
where, in the formulae (II) and (III), the radicals R¹² are identical or different and are each a C₁-C₆-alkyl group, a C₆-C₁₈-aryl group, benzyl or hydrogen and p is an integer from 2 to 50.

4. The process as claimed in one or more of claims 1 to 3, wherein the cocatalyst used is methylaluminoxane.

5. The process as claimed in claim 3 or 4, wherein the metallocene of the formula I is preactivated with an aluminoxane of the formula II and/or III before use in the polymerization reaction.

6. An olefin polymer which can be prepared by the process as claimed in one or more of claims 1 to 5.

7. The use of a metallocene of the formula I as claimed in one or more of claims 1 to 5 as catalyst in olefin polymerization.

8. A compound of the formula I 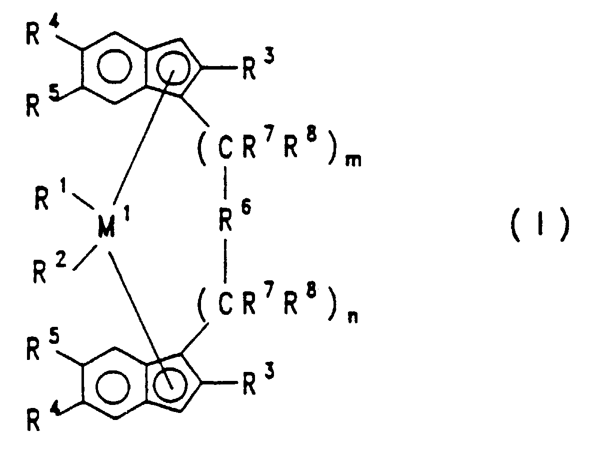 where
M¹ is a metal of group IVb, Vb or VIb of the Periodic Table,
R¹ and R² are identical or different and are each a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³, R⁴ and R⁵ are identical or different and R³ and R⁴ and/or R⁵ are different from hydrogen and are each a C₁-C₂₀-alkyl group, a C₆-C₂₀-aryl group, a C₂-C₁₀-alkenyl group, a C₇-C₄₀-arylalkyl group, a C₇-C₄₀-alkylaryl group or a C₈-C₄₀-arylalkenyl group, where these radicals may also be halogenated,
R⁴ or R⁵ can also be hydrogen,
R⁶ is 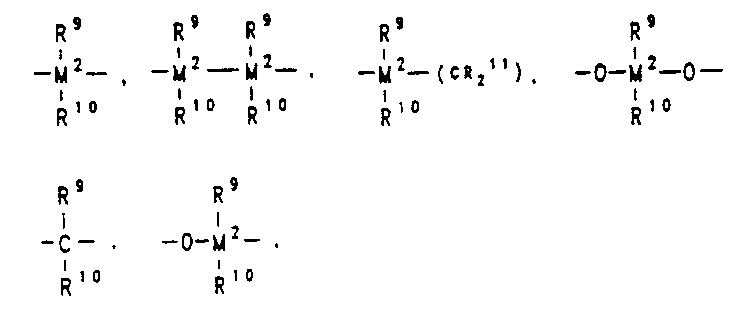 = BR⁹, =AIR⁹, -Ge-, -Sn-, -O-, -S-, =SO, =SO₂, =NR⁹, =CO, =PR⁹ or P(O)R⁹
where
R⁹, R¹⁰ and R¹¹ are identical or different and are each a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group, a C₇-C₄₀-alkylaryl group or R⁹ and R¹⁰ or R⁹ and R¹¹, in each case together with the atoms connecting them, form a ring,
M² is silicon, germanium or tin,
R⁷ and R⁸ are identical or different and are as defined for R⁹ and
m and n are identical or different and are zero, 1 or 2, where m + n is zero, 1 or 2.

9. A compound as claimed in claim 8, wherein, in formula I, M¹ is Zr or Hf, R¹ and R² are identical or different and are C₁-C₃-alkyl or chlorine, R³ and R⁴ are identical or different and are C₁-C₁₀-alkyl which may be halogenated, R⁵ is hydrogen or C₁-C₁₀-alkyl which may be halogenated, R⁶ is a radical 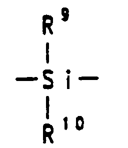 and R⁹ and R¹⁰ are identical or different and are C₁-C₁₀-alkyl or C₆-C₁₀-aryl.

10. A catalyst which is formed from a metallocene as claimed in claim 8 or 9 and a cocatalyst.

11. A catalyst as claimed in claim 10, wherein the metallocene is applied to a support.

12. A catalyst as claimed in claim 10 or 11, wherein the metallocene is prepolymerized.

## Revendications

1. Procédé de préparation d'un polymère d'oléfine par polymérisation ou copolymérisation d'une oléfine de formule R^{a}-CH=CH-R^{b}, dans laquelle R^{a} et R^{b} sont identiques ou différents et représentent un atome d'hydrogène ou un groupe hydrocarboné avec 1 à 14 atomes de carbone, ou R^{a} et R^{b} peuvent former un cycle avec les atomes les reliant, à une température de -60 à 200°C, sous une pression de 0,5 à 100 bar, en solution, en suspension ou en phase gazeuse, en présence d'un catalyseur, lequel est constitué d'un métallocène comme composé de métal de transition et d'un co-catalyseur, caractérisé en ce que le métallocène est un composé de formule I 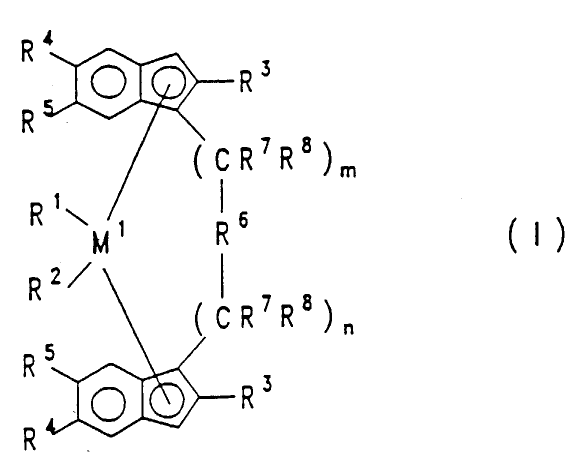 dans laquelle
M¹ représente un métal du groupe IVb, Vb ou VIb de la classification périodique,
R¹ et R² sont identiques ou différents et représentent un atome d'hydrogène, un groupe alkyle en C₁-C₁₀, un groupe alkoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³, R⁴ et R⁵ sont identiques ou différents et R³ et R⁴ et/ou R⁵ sont différents d'un atome d'hydrogène et représentent un groupe alkyle en C₁-C₂₀, un groupe aryle en C₆-C₂₀, un groupe alkylényle en C₂-C_{10,} un groupe arylalkyle en C₇-C₄₀, un groupe alkylaryle en C₇-C₄₀ ou un groupe arylalcényle en C₈-C₄₀, ces groupes pouvant également être halogénés,
R⁴ ou R⁵ peut aussi être un atome d'hydrogène,
R⁶ représente 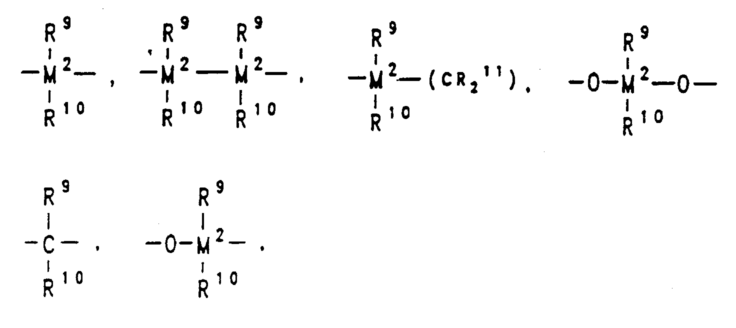 =BR⁹, =AlR⁹, -Ge-, -Sn-, -O-, -S-, =SO, =SO₂, =NR⁹, =CO, =PR⁹ ou =P(O)R⁹,
formules dans lesquelles
R⁹, R¹⁰ et R¹¹ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alkoxy en C₁-C₁₀, un groupe alcényle en C₂-C₁₀, un groupe arylalkyle en C₇-C₄₀, un groupe arylalcényle en C₈-C_{40,} un groupe alkylaryle en C₇-C₄₀ ou respectivement R⁹ et R¹⁰ ou R⁹ et R¹¹ forment un cycle avec les atomes les reliant,
M² représente le silicium, le germanium ou l'étain,
R⁷ et R⁸ sont identiques ou différents et ont la signification donnée pour R⁹ et
m et n sont identiques ou différents et représentent zéro, 1 ou 2, m plus n valant zéro, 1 ou 2.

2. Procédé selon la revendication 1, caractérisé en ce que, dans la formule I, M¹ représente Zr ou Hf, R¹ et R² sont identiques ou différents et représentent un groupe alkyle en C₁-C₃ ou un atome de chlore, R³ et R⁴ sont identiques ou différents et représentent un groupe alkyle en C₁-C₁₀ qui peut être halogéné, R⁵ représente un atome d'hydrogène ou un groupe alkyle en C₁-C₁₀, qui peut être halogéné, R⁶ représente un groupe 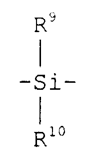 et R⁹ et R¹⁰ sont identiques ou différents et représentent un groupe alkyle en C₁-C₁₀ ou aryle en C₆-C₁₀.

3. Procédé selon la revendication 1 ou 2, caractérisé en ce qu'on utilise comme co-catalyseur un aluminoxane de formule (II) 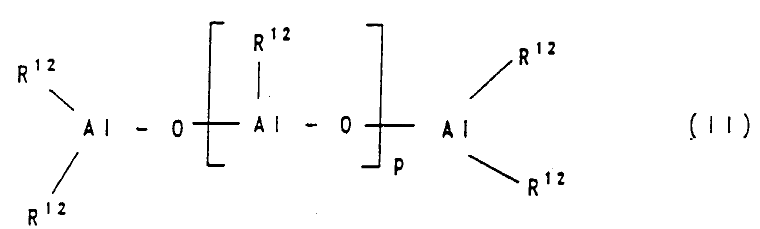 pour le type linéaire et/ou de formule (III) 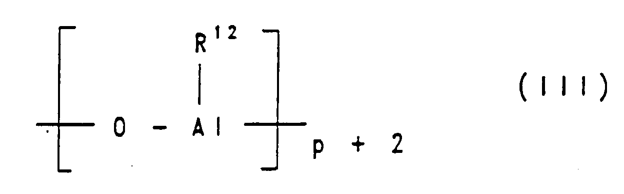 pour le type cyclique,
formules (II) et (III) dans lesquelles les radicaux R¹² peuvent être identiques ou différents et représentent un groupe alkyle en C₁-C₆, un groupe aryle en C₆-C₁₈, un groupe benzyle ou un atome d'hydrogène, et p représente un nombre entier de 2 à 50.

4. Procédé selon une ou plusieurs des revendications 1 à 3, caractérisé en ce que l'on utilise comme co-catalyseur le méthylaluminoxane.

5. Procédé selon la revendication 3 ou 4, caractérisé en ce le métallocène de formule I est préactivé, avant utilisation dans la réaction de polymérisation, avec un aluminoxane de formule II et/ou III.

6. Polymère d'oléfine, préparable d'après le procédé selon une ou plusieurs des revendications 1 à 5.

7. Utilisation d'un métallocène de formule I selon une ou plusieurs des revendication 1 à 5 comme catalyseur pour la polymérisation d'oléfines.

8. Composé de formule I 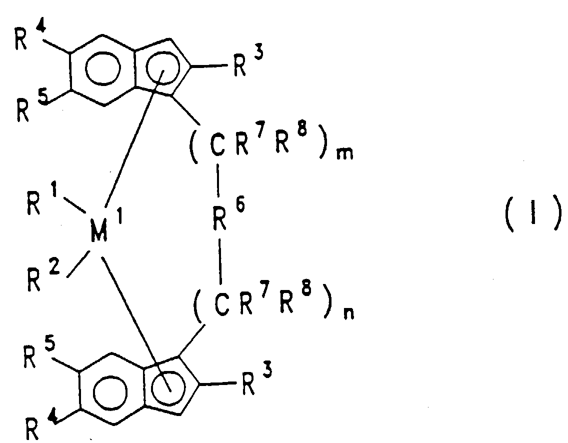 dans laquelle
M¹ représente un métal du groupe IVb, Vb ou VIb de la classification périodique,
R¹ et R² sont identiques ou différents et représentent un atome d'hydrogène, un groupe alkyle en C₁-C₁₀, un groupe alkoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³, R⁴ et R⁵ sont identiques ou différents et R³ et R⁴ et/ou R⁵ sont différents d'un atome d'hydrogène et représentent un groupe alkyle en C₁-C₂₀, un groupe aryle en C₆-C₂₀, un groupe alkylényle en C₂-C₁₀, un groupe arylalkyle en C₇-C₄₀, un groupe alkylaryle en C₇-C₄₀ ou un groupe arylalcényle en C₈-C₄₀, ces groupes pouvant également être halogénés,
R⁴ ou R⁵ peut aussi être un atome d'hydrogène,
R⁶ représente 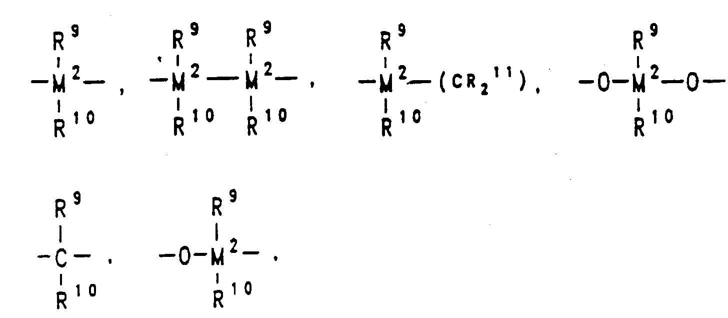 =BR⁹, =AlR⁹, -Ge-, -Sn-, -O-, -S-, =SO, =SO₂, =NR⁹, =CO, =PR⁹ ou =P(O)R⁹,
formules dans lesquelles
R⁹, R¹⁰ et R¹¹ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alkoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀ ou respectivement R⁹ et R¹⁰ ou R⁹ et R¹¹ forment un cycle avec les atomes les reliant,
M² représente le silicium, le germanium ou l'étain,
R⁷ et R⁸ sont identiques ou différents et ont la signification donnée pour R⁹ et
m et n sont identiques ou différents et représentent zéro, 1 ou 2, m plus n valant zéro, 1 ou 2.

9. Composé selon la revendication 8, caractérisé en ce que, dans la formule I, M¹ représente Zr ou Hf, R¹ et R² sont identiques ou différents et représentent un groupe alkyle en C₁-C₃ ou un atome de chlore, R³ et R⁴ sont identiques ou différents et représentent un groupe alkyle en C₁-C₁₀ qui peut être halogéné, R⁵ représente un atome d'hydrogène ou un groupe alkyle en C₁-C₁₀, qui peut être halogéné, R⁶ représente un groupe 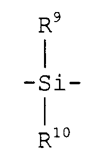 et R⁹ et R¹⁰ sont identiques ou différents et représentent un groupe alkyle en C₁-C₁₀ ou aryle en C₆-C₁₀.

10. Catalyseur, lequel est constitué d'un métallocène selon la revendication 8 ou 9 et d'un co-catalyseur.

11. Catalyseur selon la revendication 10, dans lequel le métallocène est appliqué sur un support.

12. Catalyseur selon la revendication 10 ou 11, dans lequel le métallocène est prépolymérisé.
